(19) **Europäisches Patentamt / European Patent Office / Office européen des brevets**

(11) **EP 3 018 422 B1**

(12) **EUROPEAN PATENT SPECIFICATION**

(45) Date of publication and mention of the grant of the patent:
**13.02.2019 Bulletin 2019/07**

(51) Int Cl.:
*F24D 3/18* (2006.01)   *F24D 19/10* (2006.01)
*G05D 23/19* (2006.01)

(21) Application number: **14820268.2**

(22) Date of filing: **16.06.2014**

(86) International application number:
**PCT/JP2014/003191**

(87) International publication number:
**WO 2015/001730 (08.01.2015 Gazette 2015/01)**

(54) **HEAT PUMP CONTROL DEVICE AND CONTROL METHOD FOR HEAT PUMP CONTROL DEVICE**

WÄRMEPUMPENSTEUERUNGSVORRICHTUNG UND STEUERUNGSVERFAHREN FÜR WÄRMEPUMPENSTEUERUNGSVORRICHTUNG

DISPOSITIF DE COMMANDE DE POMPE À CHALEUR ET PROCÉDÉ DE COMMANDE POUR DISPOSITIF DE COMMANDE DE POMPE À CHALEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.07.2013 JP 2013140208**

(43) Date of publication of application:
**11.05.2016 Bulletin 2016/19**

(73) Proprietor: **Panasonic Intellectual Property Management Co., Ltd.**
**Osaka-shi, Osaka 540-6207 (JP)**

(72) Inventors:
• **KHAISONGKRAM, Wathanyoo**
**Osaka-shi, Osaka 540-6207 (JP)**
• **HAYASHIDA, Gaku**
**Osaka-shi, Osaka 540-6207 (JP)**

(74) Representative: **Grünecker Patent- und Rechtsanwälte**
**PartG mbB**
**Leopoldstraße 4**
**80802 München (DE)**

(56) References cited:
**JP-A- 2004 332 998     JP-A- 2010 032 072**
**JP-A- 2010 071 569     US-A1- 2005 005 621**
**US-A1- 2010 004 790**

**Description**

Technical Field

The present disclosure relates to a heat pump control device and control method for the heat pump control device and to, for example, a heat pump control device for a heating system including a heat pump type heating device and a method for controlling the heat pump control device.

Background Art

A heat pump type hot water supply device is a device that makes hot water by absorbing heat in the atmosphere, electrically compressing and heating a refrigerant, and exchanging heat between the refrigerant heated by the heat exchanger and water. Such a heat pump type hot water supply device consumes less energy than a heater type electrical water heater. In addition, a heat pump type heating device is a heating device that uses hot water made by a heat pump for heating a room (for example, refer to PTL 1).

US 2010/004790 A1 relates to a water heater demand side management system which is configured to shift energy demand from an on-peak time window to an off-peak time window by using hot water heater load shifting. This shift is accomplished by a controller located at an end user establishment and in communication with a central control server.

Citation List

Patent Literature

PTL 1: International Publication No. 2013/027312

Summary of Invention

In the related art, however, a further improvement has been desired in order to maintain high comfort and reduce power consumption while improving the amount of power consumption suppressed.

A heat pump control device according to the invention is claimed in claim 1. Claim 1 differs from document US 2010/004790 A1 in that (a) the heating device is a heat pump type heating device with a heat pump control device; (b) it claims a reception unit that receives temperature information indicating outside temperature of space of a consumer house in which the heating device is installed; (c) the first output water temperature depends on the outside temperature; (d) a space is maintained at the first setting temperature in relation to the outside temperature; and (e) the difference between the first output water temperature and the second output water temperature becomes larger as the first output water temperature becomes higher if the outside temperature is the same.

According to the invention, high comfort can be maintained and power consumption can be reduced while increasing the amount of power consumption suppressed, thereby improving an effect of reducing the power consumption.

Brief Description of Drawings

Fig. 1 is a flowchart illustrating the outline of a process performed by a heat pump type heating system according to a first embodiment.
Fig. 2 is a diagram illustrating the configuration of the heat pump type heating system according to the first embodiment.
Fig. 3 is a block diagram illustrating the configuration of the heat pump type heating apparatus according to the first embodiment.
Fig. 4 is a diagram illustrating an example of a heating setting value of the heat pump type heating apparatus according to the first embodiment.
Fig. 5 is a block diagram illustrating the configuration of a DR control unit according to the first embodiment.
Fig. 6 is a flowchart illustrating a DF control process according to the first embodiment.
Fig. 7 is a flowchart illustrating an HP control process according to the first embodiment.
Fig. 8 is a diagram illustrating an example of a standard output water temperature table according to the first embodiment.
Fig. 9 is a diagram illustrating an example of room temperatures at times when control according to the first embodiment is executed and when control in the related art is executed.

Fig. 10 is a diagram illustrating an example of a standard output water temperature table according to a second embodiment.

Fig. 11 is a diagram illustrating an example of a standard power consumption table according to a third embodiment.

Fig. 12 is a diagram illustrating effects produced by a third embodiment.

Fig. 13 is a diagram illustrating a relationship between a maximum target output water temperature of a heating setting value and a difference according to the first embodiment.

Fig. 14 is a diagram illustrating a relationship between setting room temperature and a difference according to the second embodiment. Description of Embodiments

(Underlying Knowledge Forming Basis of the Present Disclosure)

The present inventors have found that the following problem arises in a heating system described in the "Background Art" part.

A technique disclosed in PTL 1 reduces, in a period in which electricity cost is high (hereinafter referred to as an "output suppression period"), the amount of heat generated by a heat pump per unit time. A technique is disclosed in which, as a result, the amount of power consumption suppressed is smaller than when the heat pump is completely stopped but both maintenance of high comfort and reduction of power consumption are realized.

Here, the "output suppression period" refers to a period in which the temperature of water output from the heat pump is adjusted in order to, for example, avoid an electricity peak. In the above method, house performance is taken into consideration in order to maintain room temperature in the output suppression period. In the above method, however, the characteristics of a heating apparatus are not taken into consideration, and therefore even if a heat pump type heating system can maintain room temperature, output water temperature might be set high. Accordingly, unnecessary electricity might be consumed, thereby reducing the amount of power suppressed. In addition, the characteristics of the heating apparatus that radiates heat generated by a heat pump that is different between houses are not taken into consideration. Therefore, the heat pump type heating system might not be able to maintain room temperature to a setting room temperature.

Therefore, it is desired for the heat pump type heating system to secure comfort and reduce power consumption while improving the amount of power suppressed.

As a result of the above examination, the present inventors have arrived at the following aspects of the present invention.

An aspect of the present disclosure is a heat pump control apparatus (i.e. device) that controls a heat pump type heating apparatus that supplies heat to a heating apparatus from a heat pump. The heat pump control apparatus includes a reception unit that receives temperature information indicating outside temperature of space of a consumer house in which the heating apparatus is installed, and a control unit that outputs, to the heat pump type heating apparatus, first information indicating a first output water temperature according to the outside temperature by using a memory that manages output water temperature of the heat pump for maintaining the space at a first setting temperature in relation to the outside temperature. The heat pump control apparatus stores setting information indicating a second setting temperature, which is a target temperature of the space in an output suppression period, in which power consumption of the heat pump type heating apparatus is suppressed. The control unit outputs second information to the heat pump type heating apparatus in order to switch from the first setting temperature to the second setting temperature in the output suppression period, the second information indicates a second output temperature which is different from the first output water temperature more largely as the first output water temperature becomes higher if the outside temperature is the same.

For example, when the output suppression period, in which the output water temperature of the heat pump is adjusted, has come, the heat pump control apparatus switches room temperature from the first setting temperature (for example, 20°C) to the second setting temperature (for example, 18°C). In this case, according to this aspect, for example, if the first output water temperature of the heat pump for maintaining the room temperature at the first setting temperature (for example, 20°C) when the outside temperature is -15°C is, for example, 55°C ([1]), the heat pump control apparatus switches to the second output water temperature of the heat pump for maintaining the room temperature at the second setting temperature (for example, 18°C), namely, for example, 45°C ([1]). On the other hand, if the first output water temperature of the heat pump for maintaining the room temperature at the first setting temperature (for example, 20°C) is, for example, 50°C ([2]), the heat pump control apparatus switches to the second output water temperature of the heat pump for maintaining the room temperature at the second setting temperature (for example, 18°C), namely, for example, 43°C ([2]).

Thus, according to this aspect, if the first setting temperature (20°C) is switched to the second setting temperature (18°C) in the output suppression period at the same outside temperature, second output water information indicating a second output water temperature ([1] for example, 45°C; [2] for example, 43°C) different from the first output water temperature more largely as the first output water temperature ([1] for example, 55°C; [2] for example, 45°C) becomes higher is output to the heat pump type heating apparatus.

According to the above aspect, since the second output water temperature different from the first output water temperature more largely as the first output water temperature becomes higher is set in the output suppression period in order to switch the room temperature from, for example, 20°C to, for example, 18°C, it is possible to prevent unnecessary electricity from being consumed in accordance with the first output water temperature, and, as a result, comfort can be secured and power consumption can be reduced while improving the amount of power consumption suppressed.

Embodiments of the present disclosure will be described in detail hereinafter with reference to the drawings. It is to be noted that the embodiments that will be described hereinafter are preferred examples of the present disclosure. Values, shapes, materials, components, positions at which the components are arranged, connection modes of the components, steps, order of the steps, and the like that will be mentioned in the following embodiments are examples and are not intended to limit the present disclosure. The present disclosure is defined by the claims. Therefore, among the components described in the following description, components that are not described in the independent claims, which indicate broadest concepts of the present disclosure, are not necessarily needed to achieve a goal of the present disclosure, but will be described as components configuring preferred modes.

(First Embodiment)

(Outline of First Embodiment)

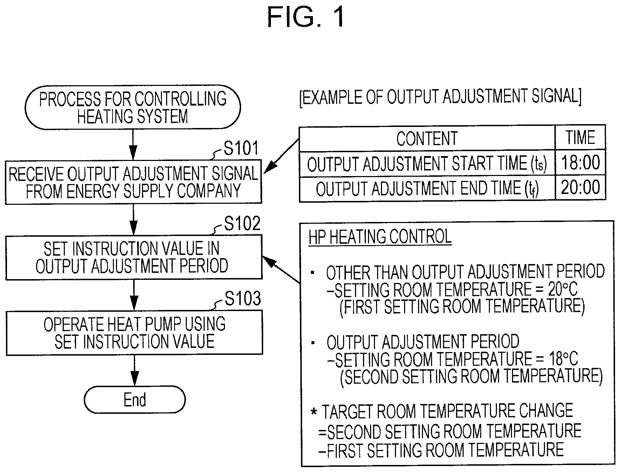

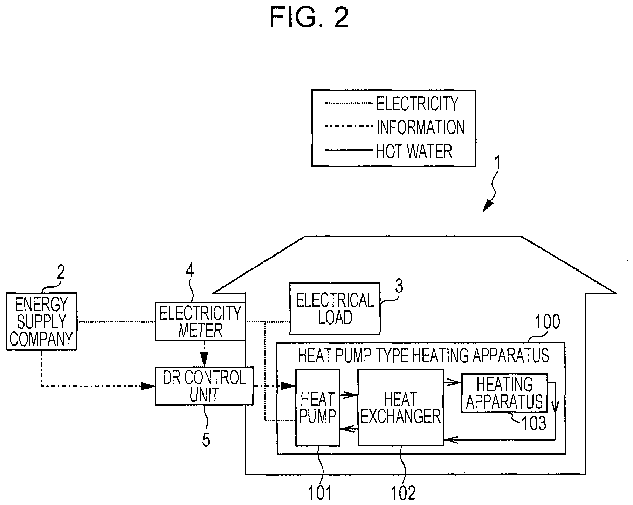

First, the outline of a method for controlling a heat pump type heating system according to a first embodiment will be described. Fig. 1 is a flowchart illustrating the outline of a process performed by the heat pump type heating system according to the first embodiment. Here, as illustrated in Fig. 2, a heat pump type heating system 1 is configured by a heat pump type heating apparatus 100 and a DR (demmand response) control unit (hereinafter also referred to as a heat pump control apparatus) 5.

As illustrated in Fig. 1, first, the heat pump type heating system 1 according to the first embodiment receives, from an energy supply company, an output adjustment signal according to electricity cost that is different between time periods (S101). The output adjustment signal includes information for identifying the output suppression period (hereinafter also referred to as a period for suppressing output), in which the power consumption of a heat pump is to be adjusted (suppressed).

For example, one of the following three methods may be used as a method for receiving an output adjustment signal. In a first method, first, a communication section 51 as a reception unit obtains in advance a future output suppression period from the energy supply company through the Internet, a smart meter, or the like and stores the future output suppression period in a storage section 52 (memory). The DR control unit 5 then operates on the basis of the obtained information in this method. Next, a second method is a method in which a user manually checks information regarding the output suppression period and the like posted on the Internet and inputs the information to the storage section 52 (memory) of the DR control unit 5 in advance. In addition, a third method is a method in which the communication section 51 as the reception unit directly receives an output suppression period start notification signal and an output suppression period end notification signal from the energy supply company through the smart meter or the like.

Although the storage section 52 (memory) is provided inside the DR control unit 5 in this embodiment, the storage section 52 (memory) may be provided outside the DR control unit 5, instead, insofar as the storage section 52 (memory) is provided inside the heat pump type heating system. In addition, the reception unit may receive information regarding outside temperature from an outside temperature detection unit 105, which will be described later. In addition, although the communication section 51 that receives information regarding the output suppression period through the Internet or the like and the reception unit that receives information regarding the outside temperature from the outside temperature detection unit 105 are the same component here, they may be different components, instead.

The adjustment of power consumption will be referred to as a demand response (hereinafter also denoted as a "DR").

As described above, the "output suppression period" refers to a period in which the temperature of water output from the heat pump is adjusted in order to avoid an electricity peak. In other words, the "output suppression period" is a period in which electricity supplied by the energy supply company reaches its peak. The output suppression period is a period that the energy supply company can arbitrarily specify. The output suppression period is specified as, for example, "two hours from 18:00 to 20:00". In addition, the heat pump type heating system 1 receives an output adjustment signal before an output adjustment start time (for example, at 17:30).

Next, the heat pump type heating system 1 sets a target value (hereinafter referred to as a "target output water temperature") of the temperature (hereinafter referred to as "output water temperature") of hot water heated by a heat pump 101 in the output suppression period (S102). The heat pump type heating system 1 operates the heat pump 101 at the set target output water temperature (S103).

In addition, in a period other than the output suppression period (hereinafter referred to as an "ordinary period"), the heat pump type heating apparatus 100 generates heat such that room temperature falls within a certain range (for example, ±0.25°C) including a predetermined first setting room temperature (for example, 20°C). The heat pump type heating apparatus 100 generates heat while referring to a heating setting value, which is a value set for the heat pump type heating apparatus 100 in advance in accordance with information including the first setting room temperature and the characteristics of a heating apparatus 103, which will be described later. In the first embodiment, the first setting room temperature is set at a standard setting room temperature (for example, 20°C) specified in heating equipment standards as a temperature comfortable for users.

On the other hand, in the output suppression period, the heat pump type heating system 1 causes the DR control unit 5, which will be described later, to determine operation conditions of the heat pump type heating apparatus 100 on the basis of the heating setting value such that when a certain period of time (for example, 1 hour) has elapsed, the room temperature falls within a certain range (for example, ±0.25°C per unit time) including a predetermined second setting room temperature (for example, 18°C), which is different from the first setting room temperature. The heat pump type heating system 1 then causes the heat pump 101 to generate heat under the operation conditions.

A difference between the room temperature and the first setting room temperature will be referred to as a room temperature change hereinafter. In addition, a difference between the second setting room temperature and the first setting room temperature, which is a target value of the room temperature change, will be referred to as a target room temperature change. For example, if the first setting room temperature is 20°C, the second setting room temperature is 18°C, and the room temperature is 19°C, the target room temperature change is 18°C - 20°C = -2°C, and the room temperature change is 19°C - 20°C = -1°C.

As described above, in this embodiment, the DR control unit 5 uses the predetermined heating setting value including information regarding the characteristics of the heating apparatus 103 used by the heat pump type heating apparatus 100 in the ordinary period. As a result, even in the output suppression period, the operation conditions of the heat pump type heating apparatus 100 for realizing the target room temperature change suitable for the characteristics of the heating apparatus 103 can be determined. The heat pump type heating system 1 can cause the room temperature to fall within the certain range including the second setting room temperature when the certain period has elapsed.

(Configuration According to First Embodiment)

Fig. 2 is a diagram illustrating the configuration of the heat pump type heating system 1 including the heat pump type heating apparatus 100 according to the first embodiment. In an example illustrated in Fig. 2, an energy supply company (power supply source) 2 supplies electricity to a house (building) through an electricity system. The electricity system is an electricity system that enables the energy supply company 2 to adjust supply of electricity in an arbitrary period. In addition, in the electricity system, an electricity meter 4 measures the amount of power consumed in the house.

In addition, in the house illustrated in Fig. 2, an electrical load 3, the DR control unit 5, and the heat pump type heating apparatus 100 are installed. The heat pump type heating apparatus 100 at least includes the heat pump (heat generation unit) 101, a heat exchanger 102, and the heating apparatus (radiation unit) 103.

The heat pump type heating apparatus 100 radiates heat generated by the heat pump 101 from the heating apparatus 103 through the heat exchanger 102. In doing so, the heat pump type heating apparatus 100 maintains, in the ordinary period, the temperature of a room in which the heating apparatus 103 is installed at the first setting room temperature. The heat pump type heating apparatus 100 changes, in the output suppression period, the room temperature to the second setting room temperature using an instruction value input from the DR control unit 5.

The electricity meter 4 measures the power consumption of the heat pump type heating apparatus 100, the power consumption of the electrical load 3, and the power consumption of the DR control unit 5. That is, the heat pump type heating apparatus 100, the electrical load 3, and the DR control unit 5 operate using power supplied from the energy supply company 2 through the electricity system.

The DR control unit 5 communicates with the energy supply company 2. The DR control unit 5 issues a control instruction to the heat pump type heating apparatus 100. For example, the DR control unit 5 controls the operation of the heat pump type heating apparatus 100 such that the power consumption of the heat pump 101 is adjusted in the output suppression period.

The energy supply company 2 is a company that supplies electricity to each house and, when desiring to adjust use of electricity in each house, transmits an output adjustment signal to the DR control unit 5.

It is to be noted that means for specifying the output suppression period is not limited to this example. For example, instead of the energy supply company, the user may specify the output suppression period through a house energy management device. For example, if information indicating a period in which electricity cost is high or the like is set, the DR control unit 5 can determine the period as the output suppression period without receiving an output adjustment signal from the energy supply company 2.

(Detailed Diagram of Heat Pump Type Heating Apparatus)

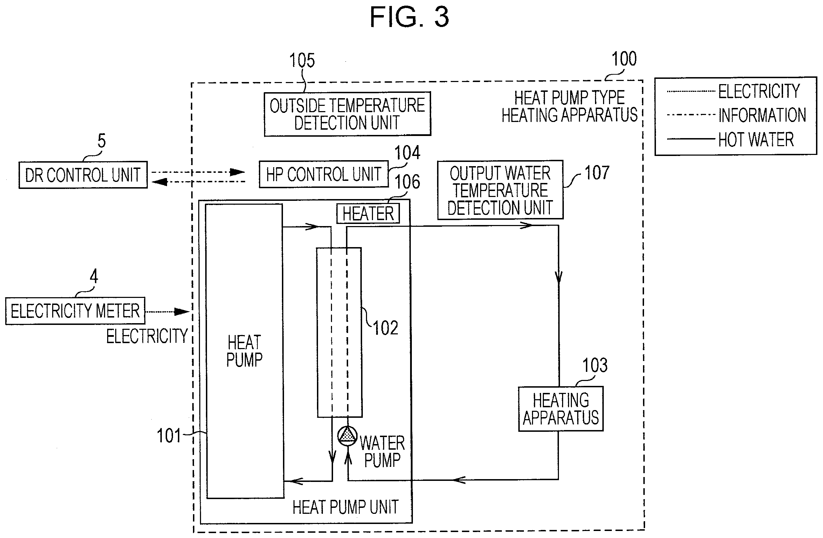

Fig. 3 is a block diagram illustrating the configuration of the heat pump type heating apparatus 100 according to the first embodiment. The heat pump type heating apparatus 100 illustrated in Fig. 3 includes the heat pump 101, the heat exchanger 102, the heating apparatus 103, an HP control unit 104, the outside temperature detection unit 105, a heater 106, and an output water temperature detection unit 107. In addition, the heat pump 101 and the heat exchanger 102 are collectively called a heat pump unit.

The heat pump 101 sets operation conditions such as the frequency of a compressor, an expansion valve, and fan air volume in accordance with the instruction value input from the HP control unit 104. Next, using air as a heat source, the compressor compresses a refrigerant to obtain a high-temperature, high-pressure vapor refrigerant. An output high-temperature, high-pressure vapor refrigerant is subjected to heat exchange with water (heat storage material) in the heat exchanger 102 and flows into the expansion valve as a low-temperature, high-pressure liquid refrigerant. That is, the refrigerant in the heat pump 101 circulates through a heat pump cycle. The refrigerant in the heat pump 101 is, for example, 410A. Because a highest temperature of an outlet of the heat exchanger 102 on a water cycle side is 55°C due to the characteristics of the refrigerant, an upper limit value of set heating temperature is 55°C. The value of the highest temperature, however, varies depending on the characteristics of the refrigerant and is not limited to the above example.

The heat exchanger (water heat exchanger) 102 exchanges heat between the high-temperature, high-pressure refrigerant output from the heat pump 101 and a secondary water cycle (that is, water circulating between the heat exchanger 102 and the heating apparatus 103) filled with water. In addition, as illustrated in Fig. 3, a water pump that adjusts the amount of water input to the heat exchanger 102 is provided along a flow path extending from the heating apparatus 103 to the heat exchanger 102.

The heating apparatus 103 is an apparatus for heating the inside of the house and is, for example, a radiator or a floor heating apparatus that radiates thermal energy into the inside of a room through a radiation panel, an air conditioner that outputs warm wind heated by the heat exchanger 102, or the like. Specific examples of the heating apparatus 103 are not limited to these, and the heating apparatus 103 may be any apparatus including a radiation unit that radiates heat generated by the heat pump 101.

The outside temperature detection unit 105 detects outside temperature and, more specifically, detects outside temperature near the heat pump type heating apparatus 100.

A specific configuration of the outside temperature detection unit 105 is not particularly limited, but, for example, a common configuration for measuring temperature, such as a thermocouple, a resistance thermometer, a thermistor, or a bimetallic thermometer, may be adopted as necessary in accordance with a measurement target.

The HP control unit 104 controls the amount of heat generated and generates heat to be radiated by the heating apparatus 103 by determining the instruction value input to the heat pump 101 and controlling the frequency of the compressor, the expansion valve, the fan air volume, and the like.

An instruction value according to the first embodiment is the target output water temperature.

First, the HP control unit 104 has a heating setting value in order to set the target output water temperature such that the room temperature falls within the certain range including the first setting room temperature.

The heating setting value indicates a correspondence relationship between the outside temperature and the target output water temperature, that is, the heating setting value indicates the thermal characteristics of the target output water temperature in relation to the outside temperature.

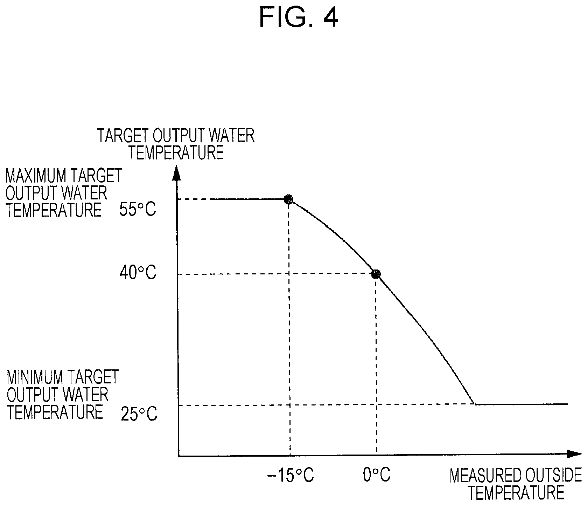

Fig. 4 illustrates an example of the heating setting value. The heating setting value indicates, for example, that, if the outside temperature is 0°C, the HP control unit 104 sets the target output water temperature at 40°C in order to maintain the room temperature within the certain range including the first setting room temperature. As illustrated in Fig. 4, a maximum target output water temperature (for example, 55°C) and a minimum target output water temperature (for example, 25°C) might be set for the heating setting value depending on the performance of the heat pump 101 and the heating apparatus 103. In this case, the HP control unit 104 performs control such that the output water temperature does not exceed the maximum target output water temperature. Similarly, the HP control unit 104 performs control such that the output water temperature does not fall short of the minimum target output water temperature. Therefore, in the example illustrated in Fig. 4, the HP control unit 104 maintains the output water temperature at 55°C if the outside temperature is lower than or equal to -15°C. On the other hand, the HP control unit 104 maintains the output water temperature at 25°C if the outside temperature is equal to or higher than 0°C.

It is to be noted that a memory that manages the temperature characteristics of the output water temperature of the heat pump that maintains, as illustrated in Fig. 4, the room temperature at the first setting room temperature in relation to the outside temperature is provided for the heat pump type heating apparatus.

The heating setting value is generally a value set, when a heat pump installation company installs the heat pump type heating apparatus 100, on the basis of the characteristics of a building in which the heat pump type heating system 1 is installed, the characteristics of the heating apparatus 103, and the standard setting room temperature specified in the heating equipment standards as a temperature comfortable for users. More specifically, the heat pump installation company calculates and sets the heating setting value such that the room temperature can be maintained within a certain range including the standard setting room temperature if the heat pump 101 operates at the target output water temperature indicated by the heating setting value in relation to the outside temperature within a certain range (for example, 1°C increments from -15°C to 10°C). In a method for calculating the heating setting value, for example, the heating setting value is calculated on the basis of heat transmission characteristics, in a steady state, between the heating apparatus 103 and the building in which the heat pump type heating system 1 is installed and heat transmission characteristics between the building and the atmosphere.

It is to be noted that if comfort desired by the user cannot be achieved, the user might change the heating setting value set by the heat pump installation company.

In addition, although a specific example of the heating setting value is not limited, but, for example, the heating setting value may be a relationship between two outside temperatures (design outside temperatures) and target output water temperatures (design output water temperatures) corresponding to the two outside temperatures. In this case, a target output water temperature corresponding to an arbitrary outside temperature may be, for example, calculated by performing interpolation using the two design outside temperatures and the design output water temperatures. Alternatively, the heating setting value may be, for example, a coefficient of a certain function. In this case, a target output water temperature corresponding to an arbitrary outside temperature may be, for example, calculated by substituting an arbitrary outside temperature for the function.

If the user changes the heating setting value, the user may change the four temperature settings, namely the two outside temperatures (for example, -15°C and 0°C in Fig. 4) and the target output water temperatures (55°C and 40°C in Fig. 4) corresponding to the two outside temperatures.

It is to be noted that the HP control unit 104 might have heating setting values corresponding to a plurality of setting room temperatures in addition to the first setting room temperature. However, this is not realistic because it takes time for the heat pump installation company to set a plurality of heating setting values and a large amount of memory is necessary to store the heating setting values.

In addition, in the ordinary period, the HP control unit 104 refers to heating settings held thereby and sets the target output water temperature at a value corresponding to the outside temperature (measured outside temperature) detected by the outside temperature detection unit 105 so that the room temperature falls within the certain range including the first setting room temperature. For example, in the case of the heating setting value illustrated in Fig. 4, the HP control unit 104 sets the target output water temperature at 40°C if the detected outside temperature is 0°C. Furthermore, the HP control unit 104 controls the frequency of the compressor and the fan air volume of the heat pump 101 to control the amount of heat generated so that the output water temperature (measured output water temperature) detected by the output water temperature detection unit 107 falls within the certain range including the set target output water temperature.

On the other hand, in the output suppression period, if the HP control unit 104 receives a target output water temperature notification in the output suppression period from the DR control unit 5, which will be described later, the HP control unit 104 gives priority to the notification. The HP control unit 104 then sets the target output water temperature in accordance with the transmitted target output water temperature in the output suppression period and controls the operation of the heat pump 101 to control the amount of heat generated so that the output water temperature detected by the output water temperature detection unit falls within the certain range including the target output water temperature.

As illustrated in Fig. 3, the heater 106 is provided along the flow path extending from the heat exchanger 102 to the heating apparatus 103 and capable of further heating the hot water output from the heat exchanger 102. A specific configuration of the heater 106 is not particularly limited, but, for example, a heating wire or the like may be used.

The heat pump type heating apparatus 100 having the above configuration determines the instruction value for the heat pump 101 in order for the temperature of the hot water output from the heat exchanger 102 to achieve the target output water temperature set by the HP control unit 104. However, it takes some time for the heat pump 101 to stabilize the amount of heat generated thereby after activation, and it is difficult for the heat pump 101 to follow large changes in settings in real-time. Therefore, if the output water temperature detected by the output water temperature detection unit 107 falls short of the target output water temperature, the heater 106 heats the hot water output from the heat exchanger 102 so that the temperature of the hot water becomes close to the target output water temperature.

(Detailed Diagram of DR Control Unit 5)

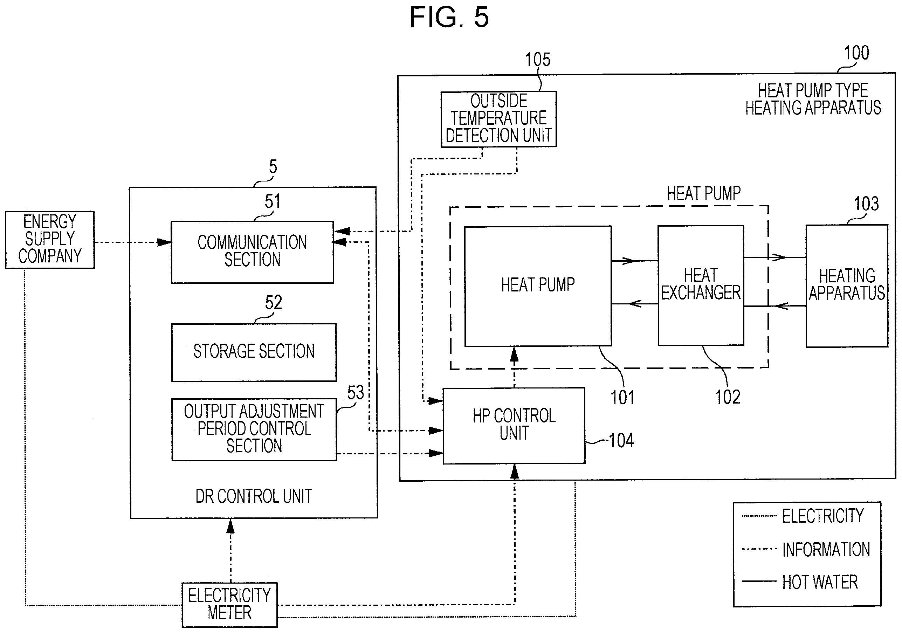

Fig. 5 is a block diagram illustrating the configuration of the DR control unit (DR control apparatus) 5 according to the first embodiment. The DR control unit 5 illustrated in Fig. 5 includes the communication section 51, the storage section (also referred to as a memory) 52, and an output suppression period control section 53. In addition, the DR control unit 5 determines the target output water temperature in the output suppression period and notifies the HP control unit 104 of the target output water temperature.

It is to be noted that although the DR control unit 5 illustrated in Figs. 2 and 3 is configured separately from the heat pump type heating apparatus 100, the present disclosure is not limited to this. That is, the DR control unit 5 may be configured integrally with the heat pump type heating apparatus 100, instead. For example, the heat pump type heating apparatus 100 may have a function corresponding to the DR control unit 5 inside thereof.

The communication section 51 receives an output adjustment signal from the energy supply company 2. In addition, in order determine the target output water temperature in the output suppression period, the communication section 51 obtains the outside temperature (measured outside temperature) detected by the outside temperature detection unit 105 and the heating setting value held by the HP control unit 104. Furthermore, the communication section 51 notifies the HP control unit 104 of the target output water temperature determined by the target output water temperature in the output suppression period.

The output adjustment signal is transmitted from the energy supply company 2, for example, before (for example, 0.5 hour to 12 hours before) a start time of the output suppression period, in which use of electricity in each house is to be adjusted. In this case, the output adjustment signal includes information for identifying the start time and an end time of the output suppression period. In this embodiment, "output adjustment start time: 18:00 and output adjustment end time: 20:00" will be taken as an example.

A specific example of the "information for identifying the start time and the end time of the output suppression period" is not particularly limited. For example, the information may be the output adjustment start time and the output adjustment end time themselves, such as "output adjustment start time: 18:00 and output adjustment end time: 20:00". Alternatively, the information may indicate the output start time and the length of the output period, such as "output adjustment start time: 18:00 and output suppression period: 2 hours".

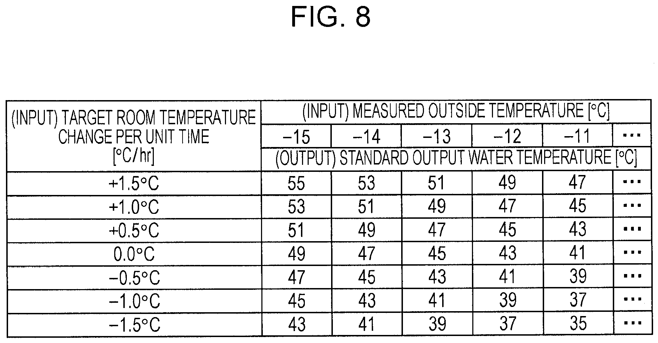

The storage section 52 holds, in order to determine the target output water temperature in the output suppression period, a standard output water temperature table indicating a correspondence relationship between the measured outside temperature and the standard output water temperature for each target room temperature change per unit time. The standard output water temperature table is, for example, a table illustrated in Fig. 8.

A first column of the standard output water temperature table illustrated in Fig. 8 indicates that if, for example, "target room temperature change per unit time = -0.5°C" and the measured outside temperature is -15°C, the standard output water temperature is 47°C. That is, in the case of a standard heat pump type heating system, which will be described later, if the outside temperature is -15°C and the heat pump 101 sets the target output water temperature at 47°C, the room temperature becomes 0.5°C lower (the room temperature change becomes - 0.5°C) than the first setting room temperature after 1 hour passes.

In addition, the standard output water temperature table is created in advance on the basis of the predetermined standard heat pump type heating system (hereinafter referred to as a "standard system") as a result of an experiment. More specifically, the standard system is a system configured by a predetermined standard heating apparatus, a building having substantially the same characteristics as the building in which the heat pump type heating system 1 is installed, and the heat pump unit of the heat pump type heating system 1.

Next, a method for creating the standard output water temperature table will be specifically described with reference to Fig. 8. In the standard system, first, if the outside temperature is constantly -15°C and the first setting room temperature is the standard setting room temperature specified in the heating equipment standards as a temperature comfortable for users, the target output water temperature is changed from 25°C to 55°C in 5°C increments in an output suppression period that lasts 1 hour. Next, room temperature changes after an end of the output suppression period (1 hour later) and corresponding target output water temperatures are accumulated. At the above outside temperature, interpolation is performed using the accumulated room temperature changes in order to calculate target output water temperatures corresponding to room temperature changes from +1.5°C to -1.5°C in 0.5°C increments. Next, by changing the outside temperature within a range of outside temperatures of -14°C to 10°C in 1°C increments, a room temperature change at each outside temperature and a corresponding target output water temperature are repeatedly accumulated in the same manner as above. Furthermore, by calculating target output water temperatures at each outside temperature corresponding to room temperature changes from +1.5°C to -1.5°C in 0.5°C increments, the standard output water temperature table is completed.

Means for creating the standard output water temperature table is not limited. Instead of an experiment, for example, a simulation or the like may be performed. In the case of a simulation, a model representing the characteristics of a building, a heat pump, a heating apparatus, and the like may be used.

If the communication section 51 receives an output adjustment signal, the output suppression period control section 53 refers to a measured outside temperature and a heating setting value obtained by the communication section 51 and determines, in the output suppression period, the target output water temperature in the output suppression period such that, when a certain period of time has elapsed, the room temperature falls within the certain range including the second setting room temperature. The output suppression period control section 53 causes the communication section 51 to notify the HP control unit 104 of the target output water temperature in the output suppression period determined thereby, in order to cause the HP control unit 104 to control the operation of the heat pump 101 at the target output water temperature in the output suppression period. In this case, as described above, the HP control unit 104 gives priority to the instruction from the DR control unit 5 (output suppression period control section 53).

(Operation)

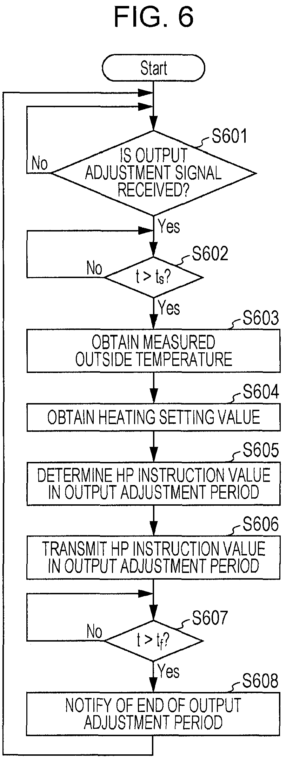

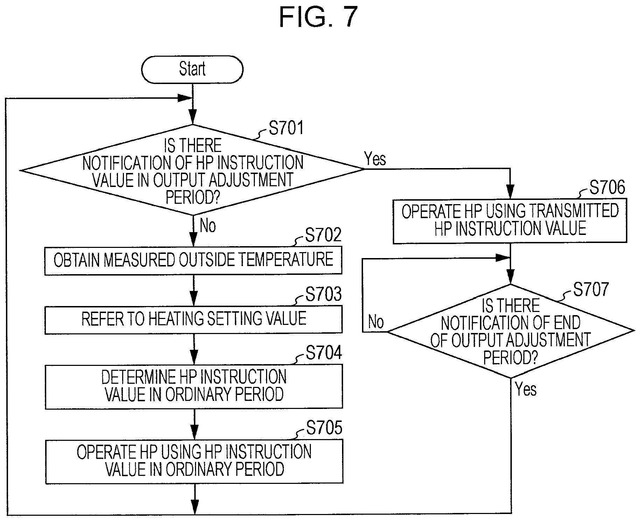

Next, a method for controlling the heat pump type heating system according to the first embodiment will be described with reference to Figs. 6 and 7. Fig. 6 is a flowchart illustrating a DR control process according to the first embodiment. Fig. 7 is a flowchart illustrating an HP control process according to the first embodiment.

First, the DR control process will be described with reference to Fig. 6. The communication section 51 of the DR control unit 5 monitors an output adjustment signal from the energy supply company 2 (S601). Upon receiving an output adjustment signal (Yes in S601), the DR control unit 5 waits until an output adjustment start time ts identified by the output adjustment signal comes (S602). When the output adjustment start time ts has come (Yes in S602), the communication section 51 of the DR control unit 5 obtains a measured outside temperature from the outside temperature detection unit 105 (S603). Furthermore, the communication section 51 of the DR control unit 5 obtains a heating setting value from the HP control unit 104 (S604).

Next, the output suppression period control section 53 determines the target output water temperature in the output suppression period such that, when a certain period of time has elapsed, the room temperature falls within the certain range including the second setting room temperature (S605).

More specifically, the output suppression period control section 53 determines an arbitrary operation outside temperature and calculates an operation output water temperature corresponding to the operation outside temperature on the basis of the heating setting value obtained by the communication section 51.

It is to be noted that a method for determining the operation outside temperature is not particularly limited. For example, a predetermined outside temperature may be used. Alternatively, a measured outside temperature obtained by the communication section 51 may be used, or if design outside temperatures are specified in the heating setting value obtained by the communication section 51, the design outside temperatures may be used.

The output suppression period control section 53 then calculates a radiation coefficient (hereinafter denoted by K) representing the characteristics of the building in which the heat pump type heating system 1 is installed and the radiation characteristics of the heating apparatus 103 using the following Expression 1 on the basis of the operation outside temperature, the operation output water temperature, and, as described above, the standard setting room temperature specified in the heating equipment standards as a temperature comfortable for users.

$$K = (To' - Tr')/(Tr' - Ta') \ldots \text{(Expression 1)}$$

However,

> $To'$ = operation output water temperature [°C]
> $Ta'$ = operation outside temperature [°C]
> $Tr'$ = standard setting room temperature [°C]

The radiation coefficient relates to the heating setting value and is a reciprocal of a product of the thermal resistance of the building in which the heat pump type heating system 1 is installed and a heat transfer coefficient of the heating apparatus 103. Here, the calculation of the radiation coefficient will be described on the basis of the heating setting value.

As indicated by the heating setting value, if the heat pump 101 outputs water having the operation output water temperature at the operation outside temperature, the room temperature is maintained within the certain range including the standard setting room temperature. In this case, if the thermal resistance of the building in which the heat pump type heating system 1 is installed is denoted by R(m2K/W) and the heat transfer coefficient of the heating apparatus 103 is denoted by H(W/m2K), the amount of heat radiated from the heating apparatus 103 into the building is:

$$H*(To' - Tr') \ldots \text{(Expression 2)}$$

Furthermore, the amount of heat radiated from the building into the atmosphere is:

$$(Tr' - Ta')/R \ldots \text{(Expression 3)}$$

Since a steady state is established, the amount of heat radiated from the heating apparatus into the building is considered equal to the amount of heat radiated from the building into the atmosphere. Therefore, from the definition of the radiation coefficient, the calculation (Expression 1) of the radiation coefficient can be obtained as the following Expression 4.

$$(Tr' - Ta')/R = H*(To' - Tr')$$

$$K = 1/(R*H) = (To' - Tr')/(Tr' - Ta') \dots (Expression\ 4)$$

That is, the radiation coefficient K is the reciprocal of the product of the thermal resistance of the building in which the heat pump type heating system 1 is installed and the heat transfer coefficient of the heating apparatus 103.

For example, in the case of the heating setting value illustrated in Fig. 4, if the standard setting room temperature specified in the heating equipment standards as a temperature comfortable for users is 20°C and the operation outside temperature is the maximum target output water temperature, K is (55°C - 20°C)/(20°C - (-15°C)) = 1.

Next, the output suppression period control section 53 calculates the target room temperature change per hour by dividing the room temperature change by a certain period (for example, 1 hour) that has elapsed since the output adjustment start time. The output suppression period control section 53 calculates the target output water temperature in the output suppression period on the basis of the calculated radiation coefficient K, the measured outside temperature, and the calculated room temperature change per hour. The output suppression period control section 53 refers to, for example, the standard output water temperature table illustrated in Fig. 8 and reads, from the table, a standard output water temperature corresponding to the measured outside temperature obtained by the communication section 51.

According to the standard output water temperature table illustrated in Fig. 8, for example, if the measured outside temperature is -15°C and the target room temperature change 1 hour after the output adjustment start time is specified as - 0.5°C, the target room temperature change per unit time is -0.5°C. Therefore, the output suppression period control section 53 sets the standard output water temperature at 47°C.

The output suppression period control section 53 then calculates the target output water temperature in the output suppression period in the following manner.

Target output water temperature in output suppression period = Tr' +

$$[(K/K')*(Tout' - Tr')] \dots (Expression\ 5)$$

However,

    K = calculated radiation coefficient (no unit) of heat pump type heating system 1
    K' = radiation coefficient (no unit; hereinafter referred to as a "standard radiation coefficient") of standard system
    Tout' = standard output water temperature [°C] read from standard output water temperature table
    Tr' = standard setting room temperature [°C]

The DR control unit 5 then causes the communication section 51 to notify the HP control unit 104 of the target output water temperature in the output suppression period determined by the output suppression period control section 53 (S606). That is, the DR control unit 5 causes the HP control unit 104 to control the heat pump 101 in the output suppression period at the determined target output water temperature.

Next, the DR control unit 5 waits until an output adjustment end time tf identified by the output adjustment time comes (S607). When the output adjustment end time tf has come (Yes in S607), the DR control unit 5 causes the communication section 51 to notify the HP control unit 104 of an end of the output suppression period (S608) and ends the DR control process.

Next, the HP control process will be described with reference to Fig. 7. The HP control unit 104 monitors a notification of the target output water temperature in the output suppression period transmitted from the communication section 51 of the DR control unit 5 (S701). If a notification of the target output water temperature in the output suppression period is not received (NO in S701), the HP control unit 104 obtains a measured outside temperature from the outside temperature detection unit 105 (S702).

The HP control unit 104 then refers to the heating setting value held thereby (S703) and reads, from the correspondence relationship between the outside temperature and the target output water temperature indicated by the heating setting value, a target output water temperature corresponding to the measured outside temperature. The HP control unit 104 determines this value of the target output water temperature as the target output water temperature (hereinafter referred to as an ordinary target output water temperature) in the ordinary period (S704).

The HP control unit 104 then operates the heat pump 101 at the determined ordinary output water temperature and ends the HP control process (S705).

On the other hand, if a notification of the target output water temperature in the output suppression period transmitted from the communication section 51 of the DR control unit 5 is received in the S701 step (Yes in S701), the HP control unit 104 gives priority to the instruction from the DR control unit 5. The HP control unit 104 then operates the heat pump 101 at the transmitted target output water temperature in the output suppression period (S706). The HP control unit 104 monitors a notification of an end of the output suppression period transmitted from the communication section 51 of the DR control unit 5 (S707). If a notification of the end of the output suppression period transmitted from the communication section 51 of the DR control unit 5 is received (Yes in S701), the HP control unit 104 ends the HP control process.

(Effects)

Effects produced by the above processes at the arbitrary measured outside temperature (Ta) and the certain first setting room temperature (standard setting room temperature) (Tr') will be described.

First, in the steady state, a relationship between the target output water temperature that is indicated by the heating setting value of the heat pump type heating system 1 and with which the room temperature can be maintained within a certain range including Tr' and the target output water temperature that is indicated by a heating setting value of the standard system and with which the room temperature can be maintained within a certain range including Tr' is obtained.

The heat transfer coefficient of the heating apparatus in the standard system assumed in the creation of the standard output water temperature table is denoted by H', and the standard radiation coefficient, which is the radiation coefficient of the standard system, is denoted by K'. In this standard system, the target output water temperature that is indicated by the heating setting value of the standard system and with which the room temperature can be maintained within the certain range including Tr' is denoted by Tout'.

On the other hand, the heat pump type heating system 1 is installed in a building having substantially the same characteristics as a building assumed for the standard system, but since the radiation characteristics of the heating apparatus 103 are different from those of the standard heating apparatus, the heat transfer coefficient of the heating apparatus 103 is different from that of a heating apparatus assumed in the standard system. The radiation coefficient of the heat pump type heating system 1 is also different from the standard radiation coefficient. The heat transfer coefficient of the heating apparatus 103 is denoted by H, and the radiation coefficient of the heat pump type heating system 1 is denoted by K. In the heat pump type heating system 1, the target output water temperature that is indicated by the heating setting value of the heat pump type heating system 1 and with which the room temperature can be maintained within the certain range including Tr' is denoted by Tout.

Next, the thermal resistance of the building in which the heat pump type heating system 1 is installed is R(m2K/W). Since the characteristics of the building assumed for the standard system are substantially the same as those of the building in which the heat pump type heating system 1 is installed, the thermal resistance is close to R.

In the steady state, both the amount of heat radiated from the building in which the heat pump type heating system 1 is installed into the atmosphere and the amount of heat radiated from the building assumed for the standard system into the atmosphere are denoted by (Tr' - Ta)/R.

In addition, the amount of heat radiated from the heating apparatus in the standard system into the building is denoted by H'*(Tout' - Tr'). On the other hand, the amount of heat radiated from the heating apparatus 103 in the heat pump type heating system 1 into the building is denoted by H*(Tout - Tr).

Thus, the following relationship (Expression 6) is obtained.

$$H'*(Tout' - Tr') = (1/R)*(Tr' - Ta)$$

$$H*(Tout - Tr') = (1/R)*(Tr' - Ta) \ldots (Expression\ 6)$$

K', which is the standard radiation coefficient, is 1/(R*H'), and K, which is the radiation coefficient of the heat pump type heating system 1, is 1/(R*H). If the above relationship is represented using the radiation coefficients, the following Expression 7 is obtained.

$$(1/K')*(Tout' - Tr') = (Tr' - Ta) = (1/K)*(Tout - Tr') \ldots (Expression\ 7)$$

That is, in the steady state, a relationship between Tout, which is the target output water temperature that is indicated by the heating setting value of the heat pump type heating system 1 and with which the room temperature can be maintained within the certain range including Tr', and Tout', which is the target output water temperature that is indicated by the heating setting value of the standard system and with which the room temperature can be maintained within the certain range including Tr', can be obtained as the following Expression 8.

$$Tout = Tr' + [(K/K')*(Tout' - Tr')] \ldots (Expression\ 8)$$

That is, the amount of heat radiated from the heating apparatus into the building at the output water temperature Tout' in the standard system is equal to the amount of heat radiated from the heating apparatus 103 into the building at the output water temperature Tout in the heat pump type heating system 1.

The room temperature might not necessarily be in the steady state in the output suppression period, but the characteristics of the building in which the heat pump type heating system 1 is installed and those of the building assumed for the standard system are substantially the same. Therefore, the degree of increase in room temperature or the degree of decrease in room temperature are substantially the same, and accordingly the relationship between Tout and Tout' represented by Expression 8 applies.

Therefore, in the heat pump type heating system 1, the target output water temperature (denoted by Tout in Expression 8) in the output suppression period obtained by Expression 5, which is obtained by modifying Expression 8 using Tout' calculated from the standard output water temperature table, can cause, in the output suppression period, the room temperature change to be the target room temperature change when a certain period of time has elapsed.

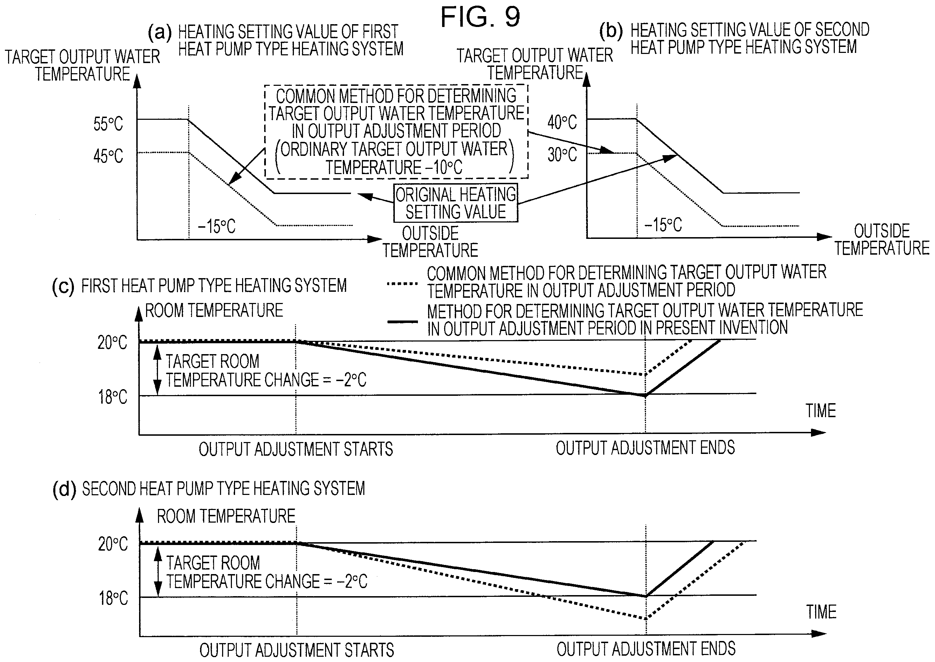

Next, in a case in which output adjustment is performed in a high electricity cost period, a comparison between the effects produced by the present disclosure and effects produced by a common method, which will be described later, in which the radiation characteristics of the heating apparatus 103 are not taken into consideration, will be described with reference to Fig. 9. The common method is a method in which a temperature lower than an output water temperature determined in the ordinary period is determined in order to suppress output. For example, as illustrated in (a) of Fig. 9, the ordinary target output water temperature is decreased by 10°C throughout the outside temperature range.

First, (a) and (b) of Fig. 9 are diagrams illustrating a common method for determining the target output water temperature in the output suppression period (hereinafter referred to as a "common method").

(a) of Fig. 9 is a diagram illustrating a case in which the common method is applied to a first heat pump type heating system (hereinafter referred to as a "first system"), which has the same configuration as the heat pump type heating system 1. (b) of Fig. 9 is a diagram illustrating a case in which the common method is applied to a second heat pump type heating system (hereinafter referred to as a "second system"), which has the same configuration as the heat pump type heating system 1, which is installed in a building having the same characteristics as the building in which the first system is installed, and which includes a heating apparatus having radiation characteristics different from those of a heating system included in the first system. In addition, it is assumed that the radiation performance of the heating apparatus in the first system is lower than that of the heating apparatus in the second system.

In addition, a solid line illustrated in (a) of Fig. 9 indicates a heating setting value (hereinafter referred to as a "first heating setting value") set on the basis of the characteristics of the building in which the first system is installed, the characteristics of the heating apparatus included in the first system, and the standard setting room temperature specified in the heating equipment standards as a temperature comfortable for users. On the other hand, a solid line illustrated in (b) of Fig. 9 indicates a heating setting value (hereinafter referred to as a "second heating setting value") set on the basis of the characteristics of the building in which the second system is installed, the characteristics of the heating apparatus in the second system, and the standard setting room temperature specified in the heating equipment standards as a temperature comfortable for users.

It is to be noted that the target output water temperature of the heat pump has an upper limit and a lower limit.

(a) of Fig. 9 illustrates a case in which the target output water temperature is set at the upper limit (55°C) when the outside temperature is -15°C. If the outside temperature is lower than or equal to -15°C, the target output water temperature does not become higher than the upper limit, namely 55°C, and remains at 55°C. Similarly, if the outside temperature is equal to or higher than 15°C, the target output water temperature is set at the lower limit (25°C).

Basically, the amount of heat radiated from the heating apparatus becomes smaller as the performance (the area of the heating apparatus or the like) of the heating apparatus for radiating heat generated by the heat pump unit becomes lower. Therefore, compared to a heating apparatus having high radiation performance (large radiation area), a heating apparatus having low radiation performance requires a high output water temperature in order to radiate heat into a building having the same characteristics. That is, even with the same building, different heating setting values need to be set if the radiation characteristics of heating apparatuses are different from each other.

As described above, in (a) and (b) of Fig. 9, it is assumed that the heating apparatus having low radiation performance is installed in the first system, compared to the second system. Therefore, as illustrated in (b) of Fig. 9, the maximum target output water temperature of the second heating setting value is set at 40°C. As illustrated in (a) of Fig.

9, the maximum target output water temperature of the first heating setting value of the heating apparatus whose radiation performance is lower than that of the heating apparatus related to the second heating setting value is higher than in the second heating setting value, namely 55°C.

Thus, as illustrated in (a) of Fig. 9, if the common method is applied to the first system, the maximum target output water temperature of the first heating setting value becomes 45°C when suppressed (broken line). On the other hand, as illustrated in (b) of Fig. 9, if the common method is applied to the second system, the maximum target output water temperature of the second heating setting value becomes 30°C when suppressed (broken line).

As illustrated in (a) of Fig. 9, if the current measured outside temperature is, for example, -15°C, the target output water temperature of the first heating setting value for adjusting the output using the common method is 45°C. On the other hand, as illustrated in (b) of Fig. 9, the target output water temperature of the second heating setting value for adjusting the output using the common method is 30°C.

Next, cases in which the present disclosure is applied to the first and second systems will be described. First, for example, assume that the current measured outside temperature is -15°C, the standard radiation coefficient K' of the standard system is 1, and the standard output water temperature Tout' read from the standard output water temperature table is 40°C.

In this case, if the present disclosure is applied to the first system and the operation outside temperature is set at -15°C on the basis of the first heating setting value, the radiation coefficient (denoted by K1) of the first system is calculated as 1 using the above-mentioned Expression 1.

$$K1 = (55°C - 20°C)/(20°C - (-15°C)) = 1$$

Therefore, the target output water temperature (denoted by Tout1) in the output suppression period is calculated as 40°C using the above-mentioned Expression 5 as follows.

$$Tout1 = 20°C + ((K1/K')*(Tout' - 20°C)) = 20°C + ((1)*(Tout' - 20°C)) = 40°C$$

On the other hand, if the present disclosure is applied to the second system and the operation outside temperature is set at -15°C on the basis of the second heating setting value, the radiation coefficient (denoted by K2) of the second system is calculated as 0.6°C using the above-mentioned Expression 1, when rounded to unit as follows.

$$K2 = (40°C - 20°C)/(20°C - (-15°C)) = 0.6$$

Therefore, the target output water temperature (denoted by Tout2) in the output suppression period is calculated as 32°C using the above-mentioned Expression 5 as follows.

$$Tout2 = 20°C + ((K2/K')*(Tout' - 20°C)) = 20°C + (0.6*(40°C - 20°C)) = 32°C$$

Thus, in the first system, a difference between the maximum target output water temperature (55°C) of the first heating setting value and the target output water temperature (40°C) in the output suppression period is 15°C. On the other hand, in the second system, a difference between the maximum target output water temperature (40°C) of the second heating setting value and the target output water temperature (32°C) in the output suppression period is 8°C.

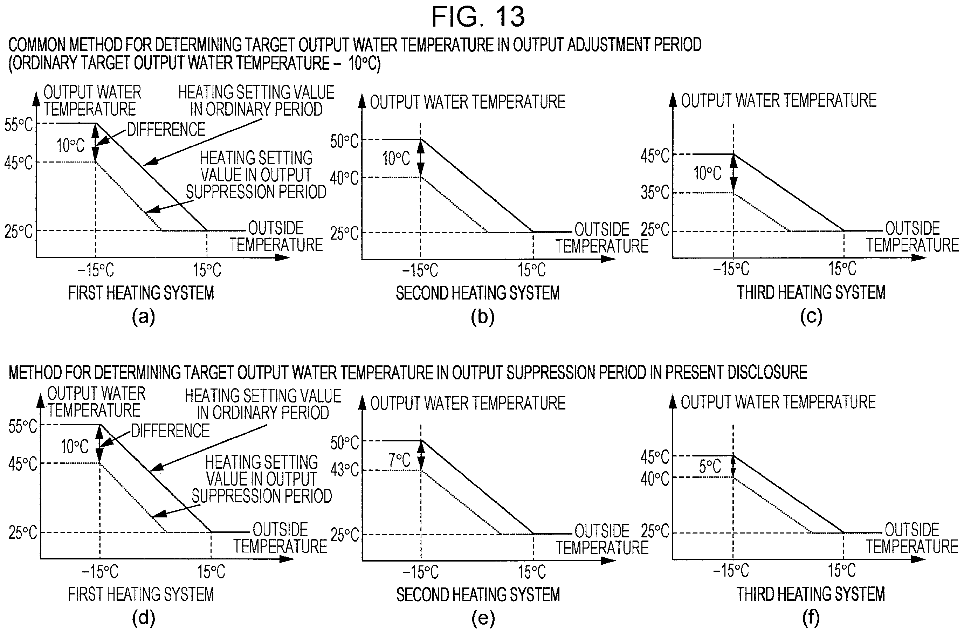

Thus, according to this embodiment, a difference in the heating setting value during the output adjustment differs depending on the radiation characteristics of the heating apparatus in the heat pump type heating system. That is, since the performance of the heating apparatus in the first system is lower than the performance of the heating apparatus in the second system, a decrease in the amount of heat radiated in the first system caused by a 1°C difference in output water temperature is smaller than in the second system. Therefore, in this embodiment, in order to reduce the same amount of heat radiated and realize the same target room temperature change, a difference in the first heating setting value is set larger than a difference in the second heating setting value, as illustrated in Fig. 13(d) and Fig. 13(e). This will be described in detail later.

Next, (c) of Fig. 9 is a diagram illustrating an example of a result obtained when the common method is applied to the first system, and (d) of Fig. 9 is a diagram illustrating an example of a result obtained when the common method is applied to the second system.

In (c) and (d) of Fig. 9, the first setting room temperature is, for example, 20°C and the second setting room temperature is, for example, 18°C. That is, the target room temperature change is -2°C. In addition, in (c) and (d) of Fig. 9, broken lines indicate examples of a room temperature change caused by the common method, and solid lines indicate examples of a room temperature change caused by the present disclosure.

As illustrated in (c) of Fig. 9, in the present disclosure, since the target output water temperature in the output suppression period is set at 40°C in consideration of the radiation characteristics of the heating apparatus, the target room temperature change can be achieved at the end of the output adjustment. In the common method, however, since the target output water temperature in the output suppression period is set at 45°C by simply decreasing the ordinary target output water temperature by 10°C without taking into consideration the radiation characteristics of the heating apparatus, the target room temperature change cannot be achieved at the end of the output adjustment, and actual room temperature is higher than the second setting room temperature. In this case, the user does not feel uncomfortable in the output suppression period with the common method, but the output of the heat pump is unnecessarily higher than in the present disclosure, thereby diminishing an output adjustment effect and consuming unnecessary electricity.

On the other hand, since, as described above, the radiation performance of the heating apparatus in the second system illustrated in (d) of Fig. 9 is higher than in the first system, the amount of heat radiated significantly decreases by decreasing the same ordinary target output water temperature by 10°C (applying the common method). In this case, as illustrated in (d) of Fig. 9, since the target output water temperature in the output suppression period is set at 32°C in the present disclosure in consideration of the radiation characteristics of the heating apparatus, the target room temperature change can be achieved at the end of the output adjustment. In the case of the common method, however, unlike the present disclosure, since the target output water temperature in the output suppression period is set at 30°C by simply decreasing the ordinary target output water temperature by 10°C without taking into consideration the radiation characteristics of the heating apparatus, the target room temperature change cannot be achieved in the output suppression period, thereby affecting the user's comfort.

That is, according to this aspect, an accurate room temperature change can be achieved, and accordingly it is possible to avoid generation of unnecessary electricity consumption while maintaining comfort.

Next, a relationship between the maximum target output water temperature and the difference in the heating setting value will be described with reference to Fig. 13. (a) to (c) of Fig. 13 are diagrams illustrating a method for applying the heating setting value in the output suppression period using the common method. (d) to (f) of Fig. 13 are diagrams illustrating a method for applying the heating setting value in the output suppression period using the present disclosure.

Solid lines in (a) and (d) of Fig. 13 indicate a heating setting value of the same heat pump type heating system (hereinafter referred to as a first system) in the ordinary period. Solid lines in (b) and (e) of Fig. 13 indicate a heating setting value of the same heat pump type heating system (hereinafter referred to as a second system) in the ordinary period. Solid lines in (c) and (f) of Fig. 13 indicate a heating setting value of the same heat pump type heating system (hereinafter referred to as a third system) in the ordinary period.

In addition, broken lines in (a) and (d) of Fig. 13 indicate heating setting values of the first system in the output suppression period. Broken lines in (b) and (e) of Fig. 13 indicate heating setting values of the second system in the output suppression period. Broken lines in (c) and (f) of Fig. 13 indicate heating setting values of the third system in the output suppression period.

It is assumed that in the first to third systems, the radiation characteristics of heating apparatuses are different from one another. Therefore, radiation performance is different in each system, and the maximum target output water temperatures of the heating setting values are also different from one another. More specifically, it is assumed that the radiation performance of the heating apparatus in the first system is lower than that of the heating apparatus in the second system, and the radiation performance of the heating apparatus in the second system is lower than the heating apparatus in the third system.

In order of ascending radiation performance, the maximum target output water temperature of the heating setting value of the first system in the ordinary period is set at 55°C, the maximum target output water temperature of the heating setting value of the second system in the ordinary period is set at 50°C, and the maximum target output water temperature of the heating setting value of the third system in the ordinary period is set at 45°C.

As described with reference to Figs. 9(a) and (b), if the common method is applied in the output suppression period, the ordinary target output water temperature of any of these heating systems decreases by 10°C. On the other hand, a case in which the present disclosure is applied will be described. In order to reduce the same amount of heat radiated and realize the same target room temperature change, a difference in the first heating setting value is set larger than a difference in the second heating setting value in the present disclosure, as illustrated in (d) and (e) of Fig. 13. In addition, as illustrated in (e) and (f) of Fig. 13, the difference in the second heating setting value is set larger than a difference in a third heating setting value. That is, as the maximum target output water temperature of the heating setting value increases, the difference in output water temperature becomes larger.

(Supplements to First Embodiment)

It is to be noted that although a method in which the room temperature decreases from the first temperature setting of 20°C to the second temperature setting of 18°C as an example in this embodiment, the method used is not limited to this. For example, the second temperature setting may be higher than the first temperature setting, that is, the room temperature may increase, instead.

In addition, although a method in which the output adjustment signal is received and the output suppression period is obtained has been described as an example in this embodiment, the method used is not limited to this. For example, a method in which information is not obtained from the energy supply company and the output suppression period is set in the HP control unit 104 in advance using a timer, a method in which the output suppression period always continues and the second setting temperature is followed, or the like may be used, instead.

In addition, although a method in which the second setting room temperature is set in advance has been described as an example in this embodiment, the method used is not limited to this. For example, a method in which the energy supply company determines the second setting temperature in accordance with an assumed value of an electricity peak or the like may be used, instead.

In addition, in this embodiment, a target room temperature change per unit time (for example, 1 hour) obtained by dividing the room temperature change by the length (for example, 1 hour) of the output suppression period is calculated, and the standard output water temperature table is referred to. However, a value used for referring to the standard output water temperature table is not limited to this.

For example, a target room temperature change per unit time obtained from a length of time obtained by subtracting time taken to complete a defrosting operation from the length of the output suppression period and the room temperature change may be used, instead.

If the outside temperature is around 0°C, a heat exchanger for outside air is frosted while the heat pump 101 is operating. Because the efficiency of the heat pump cycle decreases if there is a heavy frost, the defrosting operation is generally performed. For example, if the temperature of the heat exchange for outside air is lower than or equal to a certain value at the reception of an output adjustment signal and the defrosting operation is assumed to be performed in the output suppression period, a target room temperature change per unit time obtained by dividing the room temperature change by a length of time obtained by subtracting predetermined defrosting operation required time from the length of the output suppression period is calculated. If the standard output water temperature table is referred to using this target room temperature change, the second room temperature setting can be maintained at the end of the output adjustment even if defrosting is performed.

In addition, a heating system is assumed in this embodiment. Instead of the above-described heating system, in an example of a hot water supply heating system in which hot water can be supplied, a three-way valve may be provided between the heat exchanger 102 and the heating apparatus 103 to allow water heated by the heat exchanger 102 to flow into the heating apparatus 103 or a hot water tank and heat the heating apparatus 103 or the hot water tank.

In this configuration, the heating apparatus 103 cannot be heated while the hot water tank is heated. Therefore, a target room temperature change per unit time obtained from a length of time obtained by subtracting time taken to heat the hot water tank from the length of the output suppression period and the room temperature change may be used, instead.

For example, the heat pump 101 may obtain a history of time taken to heat the hot water tank at each time in the past and, upon receiving an output adjustment signal, calculate an average of the time taken to heat the hot water tank in the past in the output suppression period. Next, the target room temperature change per unit time obtained by dividing the room temperature change by a length of time obtained by subtracting the average of the time taken to heat the hot water tank in the past from the length of the output suppression period is calculated. If the standard output water temperature table is referred to using this target room temperature change, it is likely that a temperature close to the second room temperature setting can be maintained at the end of the output adjustment, because control is performed such that the second room temperature setting is maintained on the basis of average use of hot water supply in the past.

In addition, as illustrated in Figs. 6 and 7, the DR control unit 5 transmits a notification to the HP control unit 104 through the communication section 51 at the end of the output suppression period in this embodiment (S608). The HP control unit 104 monitors a notification from the DR control unit 5 (S707), and if the HP control unit 104 receives a notification (Yes in S707), the HP control unit 104 ends the HP control process. However, the DR control unit 5 may transmit, in advance through the communication section 51, an HP notification regarding the end time (tf) of the output suppression period along with an HP instruction value regarding the output suppression period without notifying the HP control unit 104 of the end of the output suppression period, instead (S606). In this case, the HP control unit 104 holds tf and ends the HP control process by checking whether the end time of the output suppression period has come.

(Second Embodiment)

In the first embodiment, it is assumed that the first setting room temperature is set at the standard setting room temperature specified in the heating equipment standards as a temperature comfortable for users. However, the first setting room temperature and the standard setting room temperature might not be the same depending on the user. In the first embodiment, the output suppression period control section 53 of the DR control unit 5 uses the calculated radiation coefficient and the target output water temperature in the output suppression period as they are. Therefore, the assumed first setting room temperature (standard setting room temperature) and the actual first setting room temperature might be different from each other, thereby making it impossible to achieve the target room temperature change in the output suppression period.

Therefore, in a second embodiment, the first setting room temperature set by the user is referred to separately the standard setting room temperature, in order to calculate the target output water temperature in the output suppression period. It is to be noted that detailed description of elements that are the same as those according to the first embodiment is omitted, and difference will be mainly described.

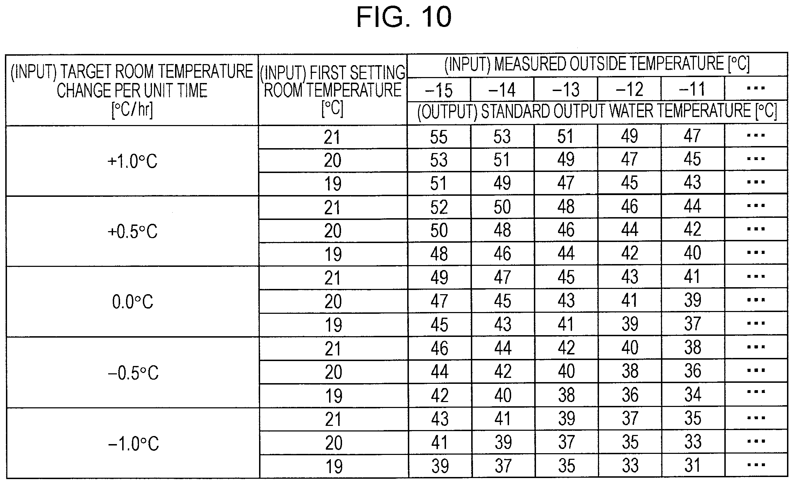

First, Fig. 10 illustrates a standard output water temperature table for determining the target output water temperature in the output suppression period according to the second embodiment.

A first column of the standard output water temperature table illustrated in Fig. 10 indicates that if, for example, "target room temperature change per unit time = -0.5°C", "first setting room temperature = 21°C", and the measured outside temperature is -15°C, the standard output water temperature is 46°C. That is, if the outside temperature is -15°C, the first setting room temperature is 21°C, and the heat pump 101 sets the target output water temperature at 46°C, the room temperature becomes 0.5°C lower (the room temperature change becomes - 0.5°C) than the first setting room temperature after 1 hour passes.

In addition, the standard output water temperature table is created in advance on the basis of the predetermined standard heat pump type heating system (hereinafter referred to as a "standard system") as a result of an experiment. More specifically, the standard system is a system configured by a predetermined standard heating apparatus, a building having substantially the same characteristics as the building in which the heat pump type heating system 1 is installed, and the heat pump unit of the heat pump type heating system 1. Using this standard system and the standard setting room temperature specified in the heating equipment standards as a temperature comfortable for users, the target output water temperature is changed in the output suppression period at a certain outside temperature and a certain setting room temperature in order to accumulate room temperature changes at the end of the output suppression period and target output temperatures corresponding to the room temperature changes. Next, interpolation is performed using the accumulated room temperature changes in order to calculate target output water temperatures corresponding to a plurality of certain room temperature changes at the certain outside temperature and the certain setting room temperature. By repeating the same operation, target output water temperatures corresponding to the plurality of certain room temperature changes are calculated at a plurality of specified outside temperatures, in order to complete the standard output water temperature table.

(Configuration)

The second embodiment assumes the same heat pump type heating apparatus 100 described in the first embodiment, which is illustrated in Figs. 2 to 4. In the second embodiment, however, it is not assumed that the first setting temperature is set at the standard setting room temperature specified in the heating equipment standards as a temperature comfortable for users.

Next, in the second embodiment, the storage section 52 of the DR control unit 5 holds the standard output water temperature table indicating a correspondence relationship between the measured outside temperature and the standard output water temperature for each target room temperature change per unit time and the first setting room temperature, in order to determine the target output water temperature in the output suppression period. The standard output water temperature table is, for example, the table illustrated in Fig. 10.

(Operation)

In the second embodiment, the output suppression period control section 53 of the DR control unit 5 determines an arbitrary operation outside temperature in order to determine the target output water temperature in the output suppression period. The output suppression period control section 53 then calculates an operation output water temperature corresponding to the operation outside temperature on the basis of a heating setting value obtained by the communication section 51 and refers to the first setting room temperature held by the storage section 52.

It is to be noted that a method for determining the operation outside temperature is not particularly limited. For example, a predetermined outside temperature may be used. In addition, a measured outside temperature obtained by the communication section 51 may be used, or if design outside temperatures are specified in the heating setting value obtained by the communication section 51, the design outside temperatures may be used.

The output suppression period control section 53 then calculates, as in the following Expression 9, the radiation coefficient K, which has no unit, representing the radiation characteristics of the heating apparatus 103 on the basis of the operation outside temperature, the operation output water temperature, and the first setting room temperature held by the storage section 52.

$$K = (To' - Tr')/(Tr' - Ta') \dots \text{(Expression 9)}$$

However,

To' = operation output water temperature [°C]
Ta' = operation outside temperature [°C]
Tr' = first setting temperature [°C]

Next, the output suppression period control section 53 calculates the target room temperature change per unit time on the basis of the length of the output suppression period and the room temperature change. The output suppression period control section 53 then calculates the target output water temperature in the output suppression period on the basis of the calculated radiation coefficient, the measured outside temperature, the calculated target room temperature change per unit time, and the first room temperature setting. The output suppression period control section 53 refers to, for example, the standard output water temperature table illustrated in Fig. 10. The output suppression period control section 53 then reads a standard output water temperature corresponding to the measured outside temperature obtained by the communication section 51 and calculates the target output water temperature in the output suppression period as in the following Expression 10.

$$\text{Target output water temperature in output suppression period} = Tr' + [(K/K')*(Tout' - Tr')] \dots \text{(Expression 10)}$$

However,

K = calculated radiation coefficient (no unit) of heat pump type heating system
K' = radiation coefficient (no unit) of standard system
Tout' = standard output water temperature [°C] read from standard output water temperature table
Tr' = first setting temperature [°C]

(Effects)

In the second embodiment, even if the first setting temperature set by the user is different from the heating setting value and the assumed standard setting room temperature, it is possible to accurately realize that, in the output suppression period, the room temperature falls within the certain range including the second setting room temperature.

A case in which the present disclosure is applied will be specifically described. First, a first heat pump type heating system (hereinafter referred to as a "first system") having the same configuration as the heat pump type heating system 1 having the heating setting value indicated by the solid line illustrated in (a) of Fig. 9 and a second heat pump type heating system (hereinafter referred to as a "second system") are assumed. The heating setting value of the heat pump type heating system 1 is assumed to maintain the room temperature achieved by the first system at 20°C. The heating setting value of the second system is assumed to maintain the room temperature achieved by the second system at 22°C. In an example, if the current measured outside temperature is -15°C, the target output water temperature in the ordinary period is 55°C as illustrated in (a) of Fig. 9. The standard radiation coefficient K' of the standard system is assumed to be 1. In addition, if a standard output water temperature table different from that illustrated in Fig. 10 is referred to, the standard output water temperature Tout' is 40°C at 20°C and Tout' is 45°C at 22°C, though not illustrated in Fig. 10.

In this case, if the present disclosure is applied to the first system and the operation outside temperature is -15°C on the basis of the first heating setting value, the radiation coefficient (denoted by K1) of the first system is calculated as 1 using the above-mentioned Expression 1.

$$K1 = (55°C - 20°C)/(20°C - (-15°C)) = 1$$

Therefore, the target output water temperature (denoted by Tout1) in the output suppression period is calculated as 40°C using the above-mentioned Expression 5 as follows.

$$Tout1 = 20°C + ((K1/K')*(Tout' - 20°C))$$
$$= 20°C + ((1)*(Tout' - 20°C))$$
$$= 20°C + ((1)*(40°C - 20°C)) = 40°C$$

On the other hand, if the present disclosure is applied to the second system and the operation outside temperature is set at -15°C on the basis of the second heating setting value, the radiation coefficient (denoted by K2) of the second system is calculated as 0.9°C using the above-mentioned Expression 1, when rounded to unit as follows.

$$K2 = (55°C - 22°C)/(22°C - (-15°C)) = 0.9$$

Therefore, the target output water temperature (denoted by Tout2) in the output suppression period is calculated as 43°C using the above-mentioned Expression 5, when rounded to unit as follows.

$$Tout2 = 20°C + ((K2/K')*(Tout' - 20°C))$$
$$= 22°C + (0.9*(Tout' - 22°C))$$
$$= 22°C + (0.9*(45°C - 22°C)) = 43°C$$

Thus, in the first system, a difference between the target output water temperature (55°C) of the first heating setting value in the ordinary period and the target output water temperature (40°C) in the output suppression period is 15°C. On the other hand, in the second system, a difference between the target output water temperature (55°C) of the second heating setting value in the ordinary period and the target output water temperature (43°C) in the output suppression period is 12°C.

Thus, according to the present disclosure, a difference in the heating setting value during the output adjustment differs depending on the setting room temperature in the ordinary period. That is, since the room temperature achieved by the second system is higher than the room temperature achieved by the first system, a difference between the room temperature and the outside temperature is larger in the second system, and accordingly the amount of heat radiated into the atmosphere is larger. In the present disclosure, in order to reduce the same amount of heat radiated and realize the same target room temperature change, the difference in the second heating setting value is set smaller than the difference in the first heating setting value.

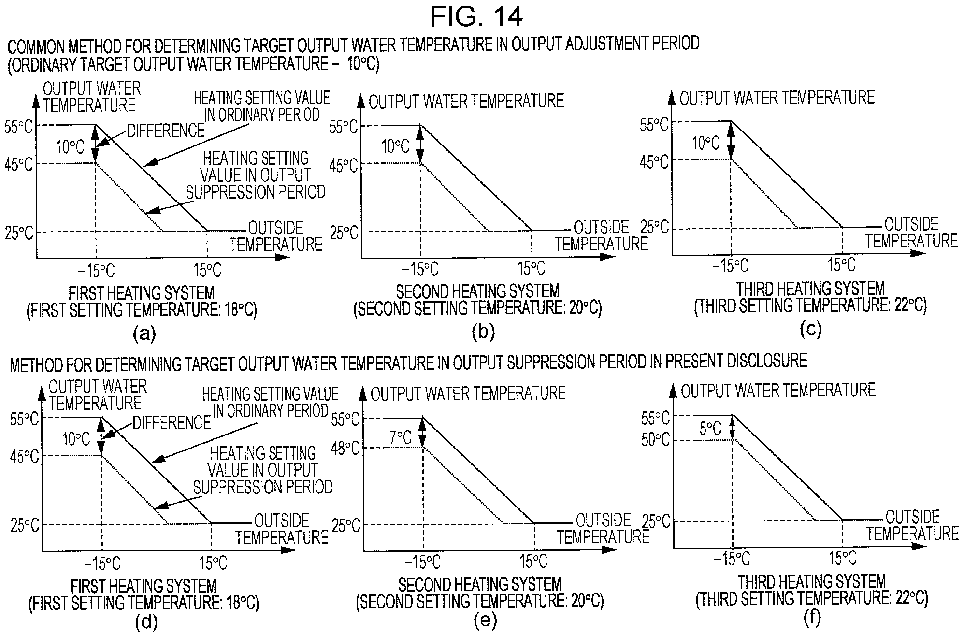

Next, a relationship between the setting room temperature and the difference will be described with reference to Fig. 14. (a) to (c) of Fig. 14 are diagrams illustrating a method for applying the heating setting value in the output suppression period in the common method, (d) to (f) of Fig. 14 are diagrams illustrating a method for applying the heating setting value in the output suppression period in the present disclosure.

Solid lines in (a) and (d) of Fig. 14 indicate a heating setting value of the same heat pump type heating system (hereinafter referred to as a first system) in the ordinary period. Solid lines in (b) and (e) of Fig. 14 indicate a heating setting value of the same heat pump type heating system (hereinafter referred to as a second system) in the ordinary period. Solid lines in (c) and (f) of Fig. 14 indicate a heating setting value of the same heat pump type heating system (hereinafter referred to as a third system) in the ordinary period.

In addition, broken lines in (a) and (d) of Fig. 14 indicate heating setting values of the first system in the output suppression period. Broken lines in (b) and (e) of Fig. 14 indicate heating setting values of the second system in the output suppression period. Broken lines in (c) and (f) Fig. 14 indicate heating setting values of the third system in the output suppression period.

Furthermore, the first to third systems are assumed to have different setting room temperatures, namely a first setting room temperature (18°C), a second setting room temperature (20°C), and a third setting room temperature (22°C), respectively.

If the common method is applied, the ordinary target output water temperature of any of these heating systems decreases by 10°C. On the other hand, a case in which the present disclosure is applied will be described. As described above, in order to reduce the same amount of heat radiated and realize the same target room temperature change, the difference in the first heating setting value is set larger than the difference in the second heating setting value in the present disclosure, as illustrated in (d) and (e) of Fig. 14. In addition, as illustrated in (e) and (f) of Fig. 14, the difference in the second heating setting value is larger than the difference in the third heating setting value. That is, as the setting room temperature increases, the difference in output water temperature becomes smaller.

(Supplements to Second Embodiment)

In the second embodiment, in order to set the standard output water temperature, the first setting room temperature is input to the standard output water temperature table, along with the target room temperature change per unit time and the measured outside temperature. In order to deal with, for example, different building characteristics in addition to elements relating to room temperature, however, building characteristics such as thermal insulating properties and heat capacity may be input to the standard output water temperature table. In addition, in order to deal with radiation from human bodies, the number of persons in the building may be input to the standard output water temperature table. In addition, in order to deal with changing weather conditions, weather conditions such as wind volume and the amount of solar radiation may be input to the standard output water temperature table.

(Third Embodiment)

(Outline of Third Embodiment)

The outline of a method for controlling a heating system according to a third embodiment will be described. The third embodiment is a modification of the first embodiment.

In the first embodiment, the heat pump type heating system 1 controls the frequency of the compressor, the expansion valve, and the fan air volume of the heat pump 101 and the like on the basis of the target output water temperature obtained by the HP control unit 104 from the DR control unit 5 such that the temperature detected by the output water temperature detection unit 107 becomes close to the target output water temperature.

In general, the temperature of water returning to the heat exchanger 102 from the heating apparatus 103 constantly varies depending on factors such as changes in the ventilation state of the house, movement of persons, and how much a valve of the heating apparatus 103 is closed.

Therefore, in the first embodiment, in order to keep the temperature detected by the output water temperature detection unit 107 constant, control for varying a capacity to heat water from the heat pump 101 through the heat exchanger 102 is performed. As a result, the power consumption of the heat pump type heating apparatus 100 also varies.

If the energy supply company 2 is transmitting output adjustment signals in order to level electricity, it is impossible for the first embodiment to avoid variation in electricity, which is problematic.

Therefore, in the third embodiment, control for maintaining the target output water temperature obtained from the DR control unit 5 is not performed, but power consumption with which the target output water temperature can be obtained as an average even if the output water temperature varies is calculated and the heat pump 101 is controlled in such a way as to maintain the power consumption. As a result, accurate changes in room temperature can be realized, unnecessary electricity consumption can be avoided, and power consumption can be leveled.

It is to be noted that in the third embodiment, description of elements that are the same as those according to the first embodiment is omitted, and differences will be mainly described hereinafter.

(Configuration According to Third Embodiment)

A configuration according to the third embodiment assumes the heat pump type heating apparatus 100 illustrated in Figs. 2, 3, and 5, but because the storage section 52, the output suppression period control section 53, and the HP control unit 104 are different from those according to the first embodiment, differences will be described.

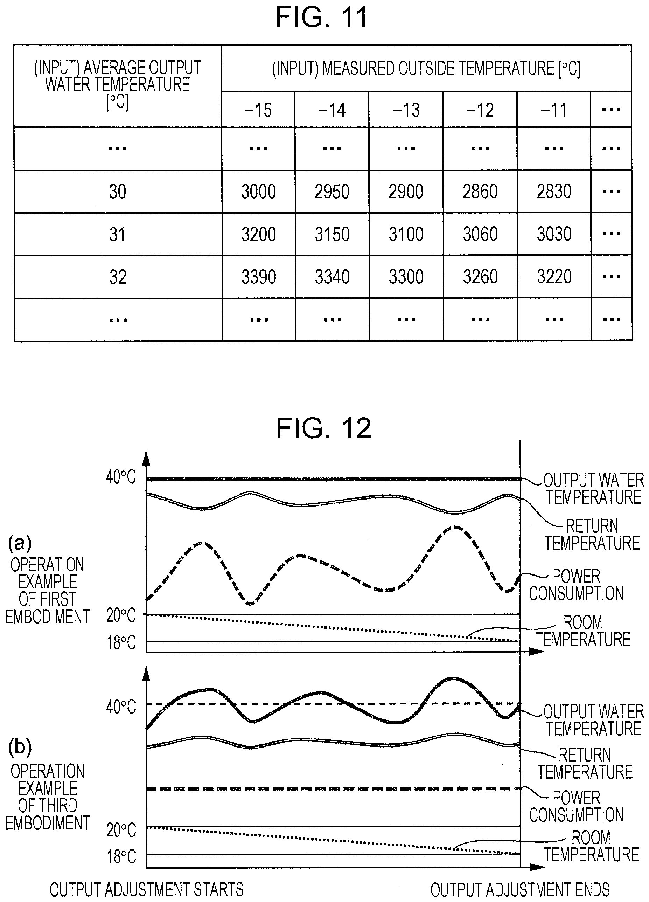

First, the storage section 52 according to the third embodiment will be described. As in the first embodiment, the storage section 52 holds the standard output water temperature table. Furthermore, in the third embodiment, the storage section 52 holds a standard power consumption table indicating a correspondence relationship between the measured outside temperature, an average of the output water temperature in the standard system, and power consumption. The standard power consumption table is, for example, a table illustrated in Fig. 11.

The standard power consumption table illustrated in Fig. 11 indicates that if, for example, the outside temperature is -15°C and the average of the output temperature is to be 30°C, the heat pump 101 is operated with a power consumption of 3,000 W,.

As with the standard output water temperature table according to the first embodiment, the standard power consumption table is created in advance on the basis of the above-described standard system. More specifically, the average of the output temperature until a certain period of time elapses at a time when, in the above-described standard system, the heat pump 101 is operated with a certain power at a certain outside temperature is obtained. Similarly, the average of the output water temperature for a combination of the outside temperature and the power consumption is repeatedly obtained, and power consumption with which the average of the output water temperature increases in increments of 1°C at each outside temperature that increases in increments of 1°C is extracted to create the standard power consumption table.

Means for creating the standard power consumption table is not limited to the above mode. Instead of an experiment in which the standard system is used, a method in which a simulation is performed may be used.

Next, the output suppression period control section 53 according to the third embodiment will be described. As in the first embodiment, if the communication section 51 receives an output adjustment signal, the output suppression period control section 53 refers to the measured outside temperature obtained by the communication section 51 and the heating setting value to determine the target output water temperature in the output suppression period. Next, the output suppression period control section 53 calculates, as output suppression period power consumption, a value obtained by referring to the standard power consumption table using the target output water temperature in the output suppression period as the average of the output water temperature and the value obtained from the communication section 51 as the measured outside temperature. The output suppression period control section 53 notifies the HP control unit 104 of the calculated output suppression period power consumption through the communication section 51 to control the operation of the heat pump 101.

Next, the HP control unit 104 according to the third embodiment will be described. The HP control unit 104 has the heating setting value and, as in the first embodiment, sets, in the ordinary period, the target output water temperature at a value corresponding to the outside temperature detected by the outside temperature detection unit 105.

In the output suppression period, the HP control unit 104 calculates the frequency of the compressor, the expansion valve, the fan air volume, and the like for the heat pump 101 on the basis of the output suppression period power consumption obtained from the DR control unit 5 such that the power consumption matches the output suppression period power consumption. For example, if the power consumption is larger than the output suppression period power consumption, the HP control unit 104 decreases the frequency of the compressor or, in the opposite case, increases the frequency of the compressor.

(Operation According to Third Embodiment)

Next, a method for controlling the heating system according to the third embodiment will be described. Although the third embodiment assumes the flowcharts illustrated in Figs. 6 and 7, differences will be described because the process for determining the HP instruction value in the output suppression period (S605) and the process for operating the HP using the transmitted HP instruction value (S706) are different.

In the third embodiment, as in the first embodiment, if the DR control unit 5 obtains an output adjustment signal, the DR control unit 5 obtains the heating setting value (S601 to S604).

Next, the output suppression period control section 53 calculates the output suppression period power consumption (S605). As in the first embodiment, the output suppression period control section 53 calculates the radiation coefficient K and, using a value obtained by referring to the standard output water temperature table, calculates the target output water temperature in the output suppression period.

Next, as described above, the output suppression period control section 53 calculates, as the output suppression period power consumption, a value obtained by referring to the standard power consumption table using the target output water temperature in the output suppression period as the average of the output water temperature and the value obtained from the communication section 51 as the measured outside temperature.

Next, the DR control unit 5 notifies the HP control unit 104 of the output suppression period power consumption through the communication section 51 (S606) and waits until the output adjustment end time comes (S607). When the output adjustment end time has come (Yes in S607), the DR control unit 5 causes the communication section 51 to notify the HP control unit 104 of the end of the output suppression period (S608) to end the DR control process.

In addition, in the HP control process illustrated in Fig. 7, the output suppression period power consumption in the output suppression period is transmitted as a result of the DR control process (S606). The HP control unit 104 then determines that a notification of the target output water temperature in the output suppression period transmitted from the communication section 51 of the DR control unit 5 has been received (Yes in S701). The HP control unit 104 gives priority to the instruction from the DR control unit 5 and operates the heat pump 101 with the transmitted output suppression period power consumption (S706). As described above, the HP control unit 104 calculates the frequency of the compressor, the expansion valve, the fan air volume, and the like for the heat pump 101 such that the power consumption matches the output suppression period power consumption.

Next, the HP control unit 104 monitors a notification of the end of the output suppression period (S707) and, if a notification of the end of the output suppression period is received (Yes in S701), ends the HP control process.

(Effects Produced by Third Embodiment)

Effects produced by the third embodiment will be described with reference to Fig. 12. Fig. 12 is a diagram illustrating an example of operations according to the first embodiment and the third embodiment. In this example, a case in which the target output water temperature in the output suppression period is 40 degrees, the first room temperature setting is 20°C, and the second room temperature setting is 18°C is assumed.

In an example of the operation according to the first embodiment illustrated in (a) of Fig. 12, the HP control unit 104 controls the heat pump 101 such that, as described above, the output water temperature is kept constant. In general, the temperature (return temperature in the figure) of water returning to the heat exchanger 102 from the heating apparatus 103 constantly varies depending on factors such as changes in the ventilation state of the house, movement of persons, and how much the valve of the heating apparatus 103 is closed. Therefore, in order to keep the temperature detected by the output water temperature detection unit 107 constant, control is performed such that a capacity to heat water from the heat pump 101 through the heat exchanger 102 is enhanced if the returning temperature is low and reduced if the returning temperature is high. As a result, the power consumption of the heat pump type heating apparatus 100 also varies, thereby causing an electricity peak. In addition, with respect to changes in room temperature, the second setting room temperature is achieved in the output suppression period as a result of control that takes into consideration the characteristics of the heating apparatus 103.

On the other hand, in the example of the operation according to the third embodiment illustrated in (b) of Fig. 12, the HP control unit 104 controls the heat pump 101 such that, as described above, the power consumption is kept constant. Therefore, the power consumption is kept constant, and accordingly peak electricity is not caused. In this case, the output water temperature varies, but since the output suppression period power consumption is calculated using the standard power consumption table such that the average of the output water temperature becomes 40°C, the output water temperature varies such that the average thereof becomes 40°C. As a result, with respect to changes in room temperature, the second setting room temperature is achieved in the output suppression period as in the first embodiment.

As described above, according to the method for controlling the heating system according to the third embodiment, by achieving accurate changes in room temperature, comfort can be maintained, unnecessary electricity consumption can be avoided, an effect of reducing the power consumption can be maximized, and the power consumption can be leveled.

(Supplements to Third Embodiment)

It is to be noted that although power consumption is used as an instruction value to the HP control unit 104 in the output suppression period, the instruction value used for control is not limited to this. For example, the frequency of the compressor of the heat pump 101, which accounts for a large portion of the power consumption of the heat pump type heating apparatus 100, may be used instead of the power consumption.

In this case, a frequency table is created on the basis of an experiment instead of the power consumption indicated by the standard power consumption table and stored in the storage section 52. The DR control unit 5 calculates a frequency corresponding to the target output water temperature in the output suppression period and issues an instruction to the HP control unit 104.

(Supplements to Entire Description)

It is to be noted that a heat pump system control apparatus, a heat pump system, and a method for controlling the heat pump system are not limited to those described in above embodiments. The heat pump system control apparatus, the heat pump system, and the method for controlling the heat pump system may be ones according to the following aspects.

(1) More specifically, each of the above-described apparatuses may be realized by a computer system configured by a microprocessor, a ROM, a RAM, a hard disk unit, a display unit, a keyboard, a mouse, and the like. The RAM or the hard disk unit stores a computer program. The microprocessor operates in accordance with the computer program, thereby enabling the apparatus to achieve its functions. Here, the computer program is configured by a plurality of combinations of command codes indicating instructions to the computer.

(2) Part or all of the plurality of components configuring each of the above-described apparatuses may be configured by a system LSI (large-scale integration). The system LSI is an ultra-multifunction LSI fabricated by integrating a plurality of components on a chip and is, more specifically, a computer system including a microprocessor, a ROM, a RAM, and the like. The ROM stores a computer program.

The microprocessor loads the computer program into the RAM from the ROM and performs calculations and the like in accordance with the loaded computer program, thereby enabling the system LSI to achieve its functions.

(3) Part or all of the plurality of components configuring each of the above-described apparatuses may be configured by an IC card removably attached to each apparatus, a single module, or the like. For example, the IC card or the module is a computer system configured by a microprocessor, a ROM, a RAM, and the like. The IC card or the module may include the above-described ultra-multifunction LSI.

The microprocessor operates in accordance with a computer program, thereby enabling the IC card or the module to achieve its functions. The IC card or the module may have tamper resistance.

(4) The present concept may be realized using the methods described in the plurality of above-described embodiments. Alternatively, the present concept may be realized by computer programs that realize these methods using a computer, or may be realized by digital signals configured by the computer programs.

Alternatively, the present concept may be realized by a computer-readable recording medium on which the computer programs or the digital signals are recorded. The recording medium may be, for example, a flexible disk, a hard disk, a CD-ROM, an MO, a DVD, a DVD-ROM, a DVD-RAM, a BD (Blu-ray (registered trademark) Disc), a semiconductor memory, or the like. Alternatively, the present concept may be realized by the digital signals recorded on the recording medium.

Alternatively, the computer programs or the digital signals may be transmitted through an electrical communication line, a wireless or wired communication line, a network typified by the Internet, data broadcast, or the like.

Alternatively, each of the above-described apparatuses may be a computer system including a microprocessor and a memory. The microprocessor may operate in accordance with a computer program stored in the memory.

Alternatively, another independent computer system may execute the methods described in the plurality of above-described embodiments by recording the programs or the digital signals on the recording medium and distributing the programs or the digital signals or by distributing the programs or the digital signals through a network or the like.

(5) Each of the above-described apparatuses may be an electronic circuit such as an integrated circuit. The plurality of above-described components may be collected as a single circuit or may be individual circuits. In addition, these components may be general-purpose circuits or dedicated circuits.

(6) The heat pump system control apparatus or the like may include memories and processors corresponding to the components described in the plurality of embodiments. The processors may execute the processes described in the plurality of embodiments using the memories.

(7) In each embodiment, the components may be realized as dedicated hardware or by executing software programs that suit the components. The components may be realized by a program execution unit such as a CPU or a processor by reading and executing the software programs recorded on a recording medium such as a hard disk or a semiconductor memory.

(8) The embodiments and the modification may be combined with one another. A process executed by a particular component described above may be executed by another component. In addition, the order of execution of processes may be changed, or a plurality of processes may be executed in parallel with one another.

Although the heat pump system control apparatus according to one or a plurality of aspects has been described on the basis of the embodiments, the present disclosure is not limited to these embodiments. Various modifications that are conceived by those skilled in the art and applied to the embodiments and modes constructed by combining the components according to different embodiments may be included in one or a plurality of aspects, insofar as the scope of the present disclosure is not deviated from.

(Heat Pump Control Apparatus According to First Aspect of Present Disclosure)

A heat pump control apparatus according to a first aspect of the present disclosure is a heat pump control apparatus that controls a heat pump type heating apparatus that supplies heat to a heating apparatus from a heat pump. The heat pump control apparatus includes a reception unit that receives temperature information indicating outside temperature of space of a consumer house in which the heating apparatus is installed, and a control unit that outputs, to the heat pump type heating apparatus, first information indicating a first output water temperature according to the outside temperature using a memory that manages output water temperature of the heat pump for maintaining the space at a first setting temperature in relation to the outside temperature. The heat pump control apparatus stores setting information indicating a second setting temperature, which is a target temperature of the space in an output suppression period, in which power consumption of the heat pump type heating apparatus is suppressed. When the output suppression period has come, the control unit outputs, to the heat pump type heating apparatus, second information indicating a second output temperature, which is, if the outside temperature is the same, different from the first output water temperature more largely as the first output water temperature becomes higher, in order to switch from the first setting temperature to the second setting temperature.

According to the above aspect, since, if the outside temperature is the same (for example, -15°C), the second output water temperature different from the first output water temperature more largely as the first output water temperature becomes higher is set in the output suppression period, in order to switch the room temperature from, for example, 20°C to, for example, 18°C, it is possible to prevent unnecessary electricity from being consumed in accordance with the first output water temperature, and, as a result, comfort can be secured and power consumption can be reduced while improving the amount of power consumption suppressed.

In the above aspect, for example, the second output water temperature may be a temperature lower than the first output water temperature.

In the above aspect, for example, the control unit may increase a difference between the first output water temperature and the second output water temperature as a highest output water temperature of the first output water temperature becomes higher.

In the above aspect, for example, if the first output water temperature is a predetermined upper limit value when the output water temperature of the heat pump is decreased from the first output water temperature to the second output water temperature, a difference between the first output water temperature and the second output water temperature may be determined as a difference corresponding to the outside temperature at which the first output water temperature reaches the upper limit value.

In the above aspect, for example, if the second output water temperature is lower than a predetermined lower limit value when the output water temperature of the heat pump is decreased from the first output water temperature to the second output water temperature, the control unit may set the second output water temperature at the lower limit value.

In the above aspect, for example, the difference between the first output water temperature and the second output water temperature may be proportional to a value of the first output water temperature at the same outside temperature between a highest output water temperature of the first output water temperature and a lowest output water temperature of the first output water temperature.

The control unit outputs may be capable of setting temperature characteristics in which the first output water temperature is different at the same first setting temperature and the same second setting temperature and, in the output suppression period, output, to the heat pump type heating apparatus, the second information indicating the second output water temperature, which is, if the outside temperature is the same, different from the first output water temperature more largely as the first output water temperature becomes higher.

In the above aspect, for example, the heat pump control apparatus may further include a communication unit that receives an output adjustment signal including information indicating the output suppression period. If the output adjustment signal is received, the control unit may output, to the heat pump type heating apparatus, information indicating the second output temperature in the output suppression period.

It is to be noted that the above aspect may be realized as a method for controlling the heat pump control apparatus, a heating system, or a program.

(Heat Pump Control Apparatus According to Second Aspect of Present Disclosure)

A heat pump control apparatus according to a second aspect of the present disclosure is a heat pump control apparatus that controls a heat pump type heating apparatus that supplies heat to a heating apparatus from a heat pump. The heat pump control apparatus includes a reception unit that receives temperature information indicating outside temperature of space of a consumer house in which the heating apparatus is installed, and a control unit that outputs, to the heat pump type heating apparatus, first information indicating a first output water temperature according to the outside temperature using a memory that manages the first output water temperature of the heat pump for maintaining the space at a first setting temperature in relation to the outside temperature. The heat pump control apparatus stores information indicating a second setting temperature, which is a target temperature of the space in an output suppression period, in which power consumption of the heat pump type heating apparatus is suppressed. When the output suppression period has come, the control unit outputs, to the heat pump type heating apparatus, second information indicating a second output water temperature, which is, if the outside temperature is the same, different from the first output water temperature more largely as the first target water temperature becomes higher, in order to switch from the first setting temperature to the second setting temperature.

For example, at the outside temperature (for example, -15°C), the heat pump control apparatus outputs, to the heat pump type heating apparatus, first output water information indicating 55°C as the first output water temperature regardless of whether the first setting temperature is 18°C or 20°C using the memory that manages the first output water temperature (for example, 55°C in both [1] and [2]) of the heat pump for maintaining the space at the first setting temperature (for example, [1] 18°C or [2] 20°C) in relation to the outside temperature.

Here, when the output suppression period has come, the heat pump control apparatus outputs, to the heat

23

pump type heating apparatus, second output water information indicating, if the outside temperature is the same (for example, -15°C), the second output water temperature (for example, [1] 45°C) different from the first output water temperature (for example, 55°C) more largely as the first target temperature ([1] 18°C) becomes higher in order to switch from the first setting temperature (for example, [1] 18°C) to the second setting temperature (for example, [1] 16°C).

On the other hand, when the output suppression period has come, the heat pump control apparatus outputs, to the heat pump type heating apparatus, second output water information indicating, if the outside temperature is the same (for example, -15°C), the second output water temperature (for example, [2] 48°C) closer to the first output water temperature (55°C) as the first setting temperature (for example, [2] 20°C) becomes higher in order to switch from the first setting temperature (for example, [2] 20°C) to the second setting temperature (for example, [2] 16°C).

According to the above aspect, when the output suppression period has come, since the second output water temperature closer to the first output water temperature as the first output water temperature becomes higher is set when the room temperature is switched from 20°C to, for example, 16°C than when the room temperature is switched from, for example, 18°C to, for example, 16°C, it is possible to prevent unnecessary electricity from being consumed in accordance with the first output water temperature, and, as a result, comfort can be secured and power consumption can be reduced while improving the amount of power consumption suppressed.

In the above aspect, for example, the second output water temperature may be a temperature lower than the first output water temperature.

In the above aspect, for example, if the first output water temperature is a predetermined upper limit value when the output water temperature of the heat pump is decreased from the first output water temperature to the second output water temperature, the control unit may determine a difference between the first output water temperature and the second output water temperature as a difference corresponding to the outside temperature at which the first output water temperature reaches the upper limit value.

In the above aspect, for example, if the second output water temperature is lower than a predetermined lower limit value when the output water temperature of the heat pump is decreased from the first output water temperature to the second output water temperature, the control unit may set the second output water temperature at the lower limit value.

It is to be noted that the above aspect may be realized as a method for controlling the heat pump control apparatus, a heating system, or a program.

(Heat Pump Control Apparatus According to Third Aspect of Present Disclosure)

A heat pump control apparatus according to a third aspect of the present disclosure is a heat pump control apparatus that controls a heat pump type heating apparatus that supplies heat to a heating apparatus from a heat pump. The heat pump control apparatus includes a reception unit that receives temperature information indicating outside temperature of space of a consumer house in which the heating apparatus is installed, and a control unit that outputs, to the heat pump type heating apparatus, first information indicating a first output water temperature according to the outside temperature using a memory that manages output water temperature of the heat pump for maintaining the space at a first setting temperature in relation to the outside temperature. The heat pump control apparatus stores setting information indicating a second setting temperature of the heating apparatus in an output suppression period, in which power consumption of the heat pump type heating apparatus is suppressed. When the output suppression period has come, the control unit outputs, to the heat pump type heating apparatus, second information indicating a second output temperature, which is, if the outside temperature is the same and a difference between the first setting temperature and the second setting temperature is the same, different from the first output water temperature more largely as the first output water temperature becomes higher, in order to switch from the first setting temperature to the second setting temperature.

For example, when the output suppression period, in which the output water temperature of the heat pump is adjusted, has come, the heat pump control apparatus switches the room temperature from the first setting temperature (for example, 20°C) to the second setting temperature (for example, 18°C). Here, assume that, for example, the outside temperature is -15°C and a difference between the first setting temperature ([1] 20°C) and the second setting temperature ([1] 18°C) is 2°C.

For example, under these conditions, in this aspect, second output water information indicating the second output water temperature (for example, [1] 45°C) can be output to the heat pump type heating apparatus in relation to the first output water temperature (for example, [1] 55°C) (first case).

Alternatively, second output water information indicating the second output water temperature ([2] 43°C) can be output to the heat pump type heating apparatus in relation to the first output water temperature (for example, [2] 50°C) (second case).

Thus, it can be seen by comparing the first case and the second case with each other that, in the first case, the first output water temperature is higher and the second output water information indicating the second output water temperature different from the first output water temperature more largely is output to the heat pump type heating apparatus.

According to the above aspect, when the output suppression period has come, the room temperature is changed from, for example, 20°C to, for example, 18°C, and accordingly the second output water temperature different from the first output water temperature more largely as the first output water temperature becomes higher is set. Therefore, it is possible to prevent unnecessary electricity from being consumed in accordance with the first output water temperature, and, as a result, comfort can be secured and power consumption can be reduced while improving the amount of power consumption suppressed.

In the above aspect, for example, the second output water temperature may be a temperature lower than the first output water temperature.

In the above aspect, for example, if the first output water temperature is a predetermined upper limit value when the output water temperature of the heat pump is decreased from the first output water temperature to the second output water temperature, the control unit may determine a difference between the first output water temperature and the second output water temperature as a difference corresponding to the outside temperature at which the first output water temperature reaches the upper limit value.

In the above aspect, for example, if the second output water temperature is lower than a predetermined lower limit value when the output water temperature of the heat pump is decreased from the first output water temperature to the second output water temperature, the control unit may set the second output water temperature at the lower limit value.

In the above aspect, for example, the difference between the first output water temperature and the second output water temperature may be proportional to a value of the first output water temperature at the same outside temperature between a highest output water temperature of the first output water temperature and a lowest output water temperature of the first output water temperature.

In the above aspect, for example, the control unit may increase a difference between the first output water temperature and the second output water temperature as a highest output water temperature of the first output water temperature becomes higher.

It is to be noted that the above aspect may be realized as a method for controlling the heat pump control apparatus, a heating system, or a program.

(Method for Controlling Heating System According to Fourth Aspect of Present Disclosure)

A method for controlling a heating system according to a fourth aspect of the present disclosure is a method for controlling a heating system that operates by receiving energy supplied from an energy supply source. The heating system includes a heat source that generates heat using the energy supplied from the energy supply source. The method for controlling the heating system includes a first obtaining step of obtaining a first heating setting, which is a first control instruction for changing temperature of space of a first consumer house, to which the heat generated by the heating system is supplied, to a first temperature, a second obtaining step of obtaining a second heating setting, which is a relationship between a certain temperature and a first control instruction for changing temperature of space of a second consumer house to the certain temperature, a third obtaining step of obtaining a second temperature, which is a target temperature at a time when the temperature of the space of the first consumer house is changed from an arbitrary temperature, a calculation step of calculating a second control instruction for changing the temperature of the space of the first consumer house to the second temperature using the first heating setting and the second heating setting, and a control step of controlling the heat source on the basis of the second control instruction.

In addition, for example, the heat source may be a heat pump that uses electricity as its energy.

In addition, for example, the first heating setting may be a correspondence relationship between outside temperature and a control instruction.

In addition, for example, the first heating setting may be a correspondence relationship between thermal insulating properties of the first consumer house and a control instruction determined on the basis of the radiation characteristics of a heating apparatus.

In addition, for example, the second heating setting may be a relationship between the temperature of the space before a change, the outside temperature, and a control instruction for changing the temperature of the space to a certain room temperature.

In addition, for example, in the calculation step, a first value of the first control instruction for achieving the second temperature may be calculated in the second heating setting, and a second value, which is obtained by correcting the first value, may be calculated from a relationship between the first heating setting and the second heating setting.

In addition, for example, the heating system may include a hot water tank. The method for controlling the heating system may further include a hot water heating step of calculating time taken for the heat source to heat the hot water tank. In the calculation step, the second control instruction for changing the temperature of the space of the first consumer house to the second temperature may be calculated from time obtained by removing the time taken to heat the hot water tank.

In addition, for example, in the calculation step, a predetermined temperature, a temperature obtained by measuring the space of the first consumer house, or the second temperature may be used as a value used for referring to the second heating setting for the temperature of the space before a change.

In addition, for example, the first control instruction and the second control instruction may each be an instruction regarding temperature of water heated by the heat source, the amount of energy consumed, or the frequency of a heat pump compressor.

It is to be noted that the overall or specific aspect described above may be realized as a heating system or a program.

Industrial Applicability

A control apparatus for a heating system according to the present disclosure is effective as a control apparatus that controls a heat pump system that supplies heat to a floor heating apparatus, an air conditioner, or the like from a heat pump. Reference Signs List

| 1   | heat pump type heating system |
| 2   | energy supply company |
| 3   | electrical load |
| 4   | electricity meter |
| 5   | DR control unit |
| 51  | communication section |
| 52  | storage section |
| 53  | output suppression period control section |
| 100 | heat pump type heating apparatus |
| 101 | heat pump |
| 102 | heat exchanger |
| 103 | heating apparatus |
| 104 | HP control unit |
| 105 | outside temperature detection unit |
| 106 | heater |
| 107 | output water temperature detection unit |

**Claims**

1.  A heat pump control device that controls a heat pump type heating device that supplies heat to a heating device from a heat pump (101), the heat pump control device comprising:

    a reception unit (51) that receives temperature information indicating outside temperature of space of a consumer house in which the heating device is installed; and
    a control unit (5) that outputs, to the heat pump type heating device, first information indicating a first output water temperature according to the outside temperature by using a memory (52) that manages output water temperature of the heat pump (101) for maintaining the space at a first setting temperature in relation to the outside temperature,
    wherein the heat pump control device stores setting information indicating a second setting temperature, which is a target temperature of the space in an output suppression period, in which power consumption of the heat pump type heating device is suppressed, and
    wherein, the control unit (5) outputs second information to the heat pump type heating device in order to switch from the first setting temperature to the second setting temperature in the output suppression period, the second information indicates a second output water temperature, wherein the difference between the first output water temperature and the second output water temperature becomes larger as the first output water temperature becomes higher if the outside temperature is the same.

2.  The heat pump control device according to Claim 1, wherein the second output water temperature is lower than the first output water temperature.

3.  The heat pump control device according to Claim 1 or 2, wherein, if the second output water temperature is lower than a predetermined lower limit value when the output water temperature of the heat pump (101) is decreased from the first output water temperature to the second output water temperature, the control unit (5) sets the second output water temperature at the lower limit value.

4. The heat pump control device according to any of Claims 1 to 3, wherein the difference between the first output water temperature and the second output water temperature is proportional to a value of the first output water temperature at the same outside temperature between a highest output water temperature of the first output water temperature and a lowest output water temperature of the first output water temperature.

5. The heat pump control device according to any of Claims 1 to 4, wherein the control unit (5) is capable of setting temperature characteristics in which the first output water temperature is different at the same first setting temperature and the same second setting temperature, and the control unit (5) outputs second information to the heat pump type heating device in order to switch from the first setting temperature to the second setting temperature in the output suppression period, the second information indicates a second output water temperature, wherein the difference between the first output water temperature and the second output water temperature becomes larger as the first output water temperature becomes higher if the outside temperature is the same.

6. The heat pump control device according to any of Claims 1 to 5, further comprising:

a communication unit that receives an output adjustment signal including information indicating the output suppression period,
wherein, if the output adjustment signal is received, the control unit (5) outputs, to the heat pump type heating device, information indicating the second output water temperature in the output suppression period.

7. The heat pump control device according to Claim 6, wherein the second output water temperature is lower than the first output water temperature.

8. The heat pump control device according to Claim 6 or 7, wherein, if the second output water temperature is lower than a predetermined lower limit value when the output water temperature of the heat pump is decreased from the first output water temperature to the second output water temperature, the control unit sets the second output water temperature at the lower limit value.

9. A control method for a heat pump control device that controls a heat pump type heating device that supplies heat to a heating device from a heat pump, the method comprising:

receiving temperature information indicating outside temperature of space of a consumer house in which the heating device is installed; and
outputting, to the heat pump type heating device, first information indicating a first output water temperature according to the outside temperature by using a memory that manages output water temperature of the heat pump for maintaining the space at a first setting temperature in relation to the outside temperature,
wherein setting information indicating a second setting temperature, which is a target temperature of the space in an output suppression period, in which power consumption of the heat pump type heating device is suppressed, is stored, and
wherein, the control unit outputs second information to the heat pump type heating device in order to switch from the first setting temperature to the second setting temperature in the output suppression period, the second information indicates a second output water temperature, wherein the difference between the first output water temperature
and the second output water temperature becomes larger as the first output water temperature becomes higher if the outside temperature is the same.

**Patentansprüche**

1. Wärmepumpen-Steuerungsvorrichtung, die eine Wärmepumpen-Heizvorrichtung steuert, die einer Heizvorrichtung Wärme von einer Wärmepumpe (101) zuführt, wobei die Wärmepumpen-Steuerungsvorrichtung umfasst:

eine Empfangs-Einheit (51), die Temperatur-Informationen empfängt, die eine Außentemperatur eines Raums eines Hauses eines Verbrauchers anzeigen, in dem die Heizvorrichtung installiert ist; sowie

eine Steuerungs-Einheit (5), die an die Wärmepumpen-Heizvorrichtung erste Informationen, die eine erste Ausgabe-Wassertemperatur entsprechend der Außentemperatur anzeigen, unter Verwendung eines Speichers (52) ausgibt, der Ausgabe-Wassertemperatur der Wärmepumpe (101) verwaltet, um den Raum auf einer ersten Einstellungs-Temperatur im Verhältnis zu der Außentemperatur zu halten,

wobei die Wärmepumpen-Steuerungsvorrichtung Einstellungs-Informationen speichert, die eine zweite Einstellungs-Temperatur anzeigen, die eine Soll-Temperatur des Raums in einer Periode eingeschränkter Ausgabe ist, in der Stromverbrauch der Wärmepumpen-Heizvorrichtung eingeschränkt wird, und

die Steuerungs-Einheit (5) zweite Informationen an die Wärmepumpen-Heizvorrichtung ausgibt, um von der ersten Einstellungs-Temperatur auf die zweite Einstellungs-Temperatur in der Periode eingeschränkter Ausgabe umzuschalten, wobei die zweiten Informationen eine zweite Ausgabe-Wassertemperatur anzeigen und die Differenz zwischen der ersten Ausgabe-Wassertemperatur und der zweiten Ausgabe-Wassertemperatur größer wird, wenn die erste Ausgabe-Wassertemperatur steigt und dabei die Außentemperatur gleich bleibt.

2. Wärmepumpen-Steuerungsvorrichtung nach Anspruch 1, wobei die zweite Ausgabe-Wassertemperatur niedriger ist als die erste Ausgabe-Wassertemperatur.

3. Wärmepumpen-Steuerungsvorrichtung nach Anspruch 1 oder 2, wobei, wenn die zweite Ausgabe-Wassertemperatur unter einem vorgegebenen unteren Grenzwert liegt und die Ausgabe-Wassertemperatur der Wärmepumpe (101) von der ersten Ausgabe-Wassertemperatur auf die zweite Ausgabe-Wassertemperatur gesenkt wird, die Steuerungs-Einheit (5) die zweite Ausgabe-Wassertemperatur auf den unteren Grenzwert einstellt.

4. Wärmepumpen-Steuerungsvorrichtung nach einem der Ansprüche 1 bis 3, wobei die Differenz zwischen der ersten Ausgabe-Wassertemperatur und der zweiten Ausgabe-Wassertemperatur proportional zu einem Wert der ersten Ausgabe-Wassertemperatur bei der gleichen Außentemperatur zwischen einer höchsten Ausgabe-Wassertemperatur der ersten Ausgabe-Wassertemperatur und einer niedrigsten Ausgabe-Wassertemperatur der ersten Ausgabe-Wassertemperatur ist.

5. Wärmepumpen-Steuerungsvorrichtung nach einem der Ansprüche 1 bis 4, wobei die Steuerungs-Einheit (5) in der Lage ist, Temperatur-Kennlinien einzustellen, bei denen die erste Ausgabe-Wassertemperatur bei der gleichen ersten Einstellungs-Temperatur und der gleichen zweiten Einstellungs-Temperatur verschieden ist, und die Steuerungs-Einheit (5) zweite Informationen an die Wärmepumpen-Heizvorrichtung ausgibt, um von der ersten Einstellungs-Temperatur auf die zweite Einstellungs-Temperatur in der Periode eingeschränkter Ausgabe umzuschalten, wobei die zweiten Informationen eine zweite Ausgabe-Wassertemperatur anzeigen und die Differenz zwischen der ersten Ausgabe-Wassertemperatur und der zweiten Ausgabe-Wassertemperatur größer wird, wenn die erste Ausgabe-Wassertemperatur steigt und dabei die Außentemperatur gleich bleibt.

6. Wärmepumpen-Steuerungsvorrichtung nach einem der Ansprüche 1 bis 5, die des Weiteren umfasst:

eine Kommunikations-Einheit, die ein Ausgabeanpassungs-Signal empfängt, das Informationen enthält, die die Periode eingeschränkter Ausgabe anzeigen,

wobei, wenn das Ausgabeanpassungs-Signal empfangen wird, die Steuerungs-Einheit (5) an die Wärmepumpen-Heizvorrichtung Informationen ausgibt, die die zweite Ausgabe-Wassertemperatur in der Periode eingeschränkter Ausgabe anzeigen.

7. Wärmepumpen-Steuerungsvorrichtung nach Anspruch 6, wobei die zweite Ausgabe-Wassertemperatur niedriger ist als die erste Ausgabe-Wassertemperatur.

8. Wärmepumpen-Steuerungsvorrichtung nach Anspruch 6 oder 7, wobei, wenn die zweite Ausgabe-Wassertemperatur unter einem vorgegebenen unteren Grenzwert liegt und die Ausgabe-Wassertemperatur der Wärmepumpe von der ersten Ausgabe-Wassertemperatur auf die zweite Ausgabe-Wassertemperatur gesenkt wird, die Steuerungs-Einheit die zweite Ausgabe-Wassertemperatur auf den unteren Grenzwert einstellt.

9. Steuerungsverfahren für eine Wärmepumpen- Steuerungsvorrichtung, die eine Wärmepumpen-Heizvorrichtung steuert, die einer Heizvorrichtung Wärme von einer Wärmepumpe zuführt, wobei das Verfahren umfasst:

Empfangen von Temperatur-Informationen, die eine Außentemperatur eines Raums eines Hauses eines Verbrauchers anzeigen, in dem die Heizvorrichtung installiert ist; und

Ausgeben erster Informationen, die eine erste Ausgabe-Wassertemperatur entsprechend der Außentemperatur anzeigen, an die Wärmepumpen-Heizvorrichtung unter Verwendung eines Speichers, der Ausgabe-Wassertemperatur der Wärmepumpe verwaltet, um den Raum auf einer ersten Einstellungs-Temperatur im Verhältnis zu der Außentemperatur zu halten,

wobei Einstellungs-Informationen, die eine zweite Einstellungs-Temperatur anzeigen, die eine Soll-Temperatur des Raums in einer Periode eingeschränkter Ausgabe ist, in der Stromverbrauch der Wärmepumpen-Heizvorrichtung eingeschränkt wird, gespeichert werden, und

die Steuerungs-Einheit zweite Informationen an die Wärmepumpen-Heizvorrichtung ausgibt, um von der ersten Einstellungs-Temperatur auf die zweite Einstellungs-Temperatur in der Periode eingeschränkter Ausgabe umzuschalten, wobei die zweiten Informationen eine zweite Ausgabe-Wassertemperatur anzeigen und die Differenz zwischen der ersten Ausgabe-Wassertemperatur und der zweiten Ausgabe-Wassertemperatur größer wird, wenn die erste Ausgabe-Wassertemperatur steigt und dabei die Außentemperatur gleich bleibt.

## Revendications

1. Dispositif de contrôle de pompe à chaleur qui contrôle un dispositif de chauffage de type pompe à chaleur qui alimente de la chaleur d'une pompe à chaleur (101) à un dispositif de chauffage, le dispositif de contrôle de pompe à chaleur comprenant :

une unité de réception (51) qui reçoit de l'information de température qui indique la température extérieure de l'espace de la maison d'un consommateur dans laquelle est installé un dispositif de chauffage ; et

une unité de contrôle (5) qui envoie, au dispositif de chauffage de type pompe à chaleur, une première information qui indique une première température d'eau de sortie en fonction de la température extérieure en utilisant une mémoire (52) qui gère la température d'eau de sortie de la pompe à chaleur (101) pour maintenir l'espace à une première température de réglage en fonction de la température extérieure,

dans lequel le dispositif de contrôle de pompe à chaleur stocke de l'information de réglage qui indique une deuxième température de réglage, qui est une température cible de l'espace dans une période d'inhibition de sortie, dans lequel la consommation d'énergie du dispositif de chauffage de type pompe à chaleur est inhibée, et

dans lequel l'unité de contrôle (5) envoie une deuxième information au dispositif de chauffage de type pompe à chaleur de manière à commuter de la première température de réglage à la deuxième température de réglage dans la période d'inhibition de sortie, la deuxième information indiquant une deuxième température d'eau de sortie, dans lequel la différence entre la première température d'eau de sortie et la deuxième température d'eau de sortie augmente alors qu'augmente la première température d'eau de sortie si la température extérieure est la même.

2. Dispositif de contrôle de pompe à chaleur selon la revendication 1, dans lequel la deuxième température d'eau de sortie est inférieure à la première température d'eau de sortie.

3. Dispositif de contrôle de pompe à chaleur selon la revendication 1 ou 2, dans lequel, si la deuxième température d'eau de sortie est inférieure à une valeur de limite inférieure prédéterminée quand la température d'eau de sortie de la pompe à chaleur (101) est réduite de la première température d'eau de sortie à la deuxième température d'eau de sortie, l'unité de contrôle (5) établit la deuxième température d'eau de sortie à la valeur de limite inférieure.

4. Dispositif de contrôle de pompe à chaleur selon l'une quelconque des revendications 1 à 3, dans lequel la différence entre la première température d'eau de sortie et la deuxième température d'eau de sortie est proportionnelle à une valeur de la première température d'eau de sortie à la même température extérieure entre la température d'eau de sortie la plus élevée de la première température d'eau de sortie et la température d'eau de sortie la plus basse de la première température d'eau de sortie.

5. Dispositif de contrôle de pompe à chaleur selon l'une quelconque des revendications 1 à 4, dans lequel l'unité de contrôle (5) est capable d'établir des caractéristiques de température où la première température d'eau de sortie est différente à la même première température de réglage et à la même deuxième température de réglage, et l'unité de contrôle (5) envoie une deuxième information au dispositif de chauffage de type pompe à chaleur de manière à commuter de la première température de réglage à la deuxième température de réglage dans la période d'inhibition de sortie, la deuxième information indiquant une deuxième température d'eau de sortie, dans lequel la différence entre la première température d'eau de sortie et la deuxième température d'eau de sortie augmente alors qu'augmente la première température d'eau de sortie si la température extérieure est la même.

**6.** Dispositif de contrôle de pompe à chaleur selon l'une quelconque des revendications 1 à 5, comprenant en outre :

une unité de communication qui reçoit un signal de réglage de sortie comprenant de l'information qui indique la période d'inhibition de sortie,

dans lequel, si le signal de réglage de sortie est reçu, l'unité de contrôle (5) sort, vers le dispositif de chauffage de type pompe à chaleur, de l'information qui indique la deuxième température d'eau de sortie dans la période d'inhibition de sortie.

**7.** Dispositif de contrôle de pompe à chaleur selon la revendication 6, dans lequel la deuxième température d'eau de sortie est inférieure à la première température d'eau de sortie.

**8.** Dispositif de contrôle de pompe à chaleur selon la revendication 6 ou 7 dans lequel, si la deuxième température d'eau de sortie est inférieure à une valeur de limite inférieure prédéterminée quand la température d'eau de sortie de la pompe à chaleur est réduite de la première température d'eau de sortie à la deuxième température d'eau de sortie, l'unité de contrôle établit la deuxième température d'eau de sortie à la valeur de limite inférieure.

**9.** Procédé de contrôle pour un dispositif de contrôle de pompe à chaleur qui contrôle un dispositif de chauffage de type pompe à chaleur qui alimente de la chaleur d'une pompe à chaleur à un dispositif de chauffage, le procédé comprenant :

la réception d'information de température qui indique la température extérieure de l'espace de la maison d'un consommateur dans laquelle est installé le dispositif de chauffage ; et

la sortie, vers le dispositif de chauffage de type pompe à chaleur, d'une première information qui indique une première température d'eau de sortie en fonction de la température extérieure en utilisant une mémoire qui gère la température d'eau de sortie de la pompe à chaleur pour maintenir l'espace à une première température de réglage en fonction de la température extérieure,

dans lequel est stockée de l'information de réglage qui indique une deuxième température de réglage, qui est une température cible de l'espace dans une période d'inhibition de sortie, dans laquelle la consommation d'énergie du dispositif de chauffage de type pompe à chaleur est inhibée, et

dans lequel l'unité de contrôle envoie une deuxième information au dispositif de chauffage de type pompe à chaleur de manière à commuter de la première température de réglage à la deuxième température de réglage dans la période d'inhibition de sortie, la deuxième information indiquant une deuxième température d'eau de sortie, dans lequel la différence entre la première température d'eau de sortie et la deuxième température d'eau de sortie augmente alors qu'augmente la première température d'eau de sortie si la température extérieure est la même.

# FIG. 1

PROCESS FOR CONTROLLING HEATING SYSTEM

↓

RECEIVE OUTPUT ADJUSTMENT SIGNAL FROM ENERGY SUPPLY COMPANY — S101

↓

SET INSTRUCTION VALUE IN OUTPUT ADJUSTMENT PERIOD — S102

↓

OPERATE HEAT PUMP USING SET INSTRUCTION VALUE — S103

↓

End

[EXAMPLE OF OUTPUT ADJUSTMENT SIGNAL]

| CONTENT | TIME |
|---|---|
| OUTPUT ADJUSTMENT START TIME ($t_s$) | 18:00 |
| OUTPUT ADJUSTMENT END TIME ($t_f$) | 20:00 |

HP HEATING CONTROL

- OTHER THAN OUTPUT ADJUSTMENT PERIOD
  -SETTING ROOM TEMPERATURE = 20°C
  (FIRST SETTING ROOM TEMPERATURE)

- OUTPUT ADJUSTMENT PERIOD
  -SETTING ROOM TEMPERATURE = 18°C
  (SECOND SETTING ROOM TEMPERATURE)

∗ TARGET ROOM TEMPERATURE CHANGE
  =SECOND SETTING ROOM TEMPERATURE
  -FIRST SETTING ROOM TEMPERATURE

# FIG. 2

# FIG. 3

Legend:
- ·········· ELECTRICITY
- ·—·—·— INFORMATION
- ——— HOT WATER

- 105 OUTSIDE TEMPERATURE DETECTION UNIT
- 100 HEAT PUMP TYPE HEATING APPARATUS
- 5 DR CONTROL UNIT
- 104 HP CONTROL UNIT
- 106 HEATER
- 107 OUTPUT WATER TEMPERATURE DETECTION UNIT
- 4 ELECTRICITY METER
- ELECTRICITY
- 101 HEAT PUMP
- 102
- WATER PUMP
- 103 HEATING APPARATUS
- HEAT PUMP UNIT

EP 3 018 422 B1

# FIG. 4

# FIG. 5

ENERGY SUPPLY COMPANY

**5** DR CONTROL UNIT

**51** COMMUNICATION SECTION

**52** STORAGE SECTION

**53** OUTPUT ADJUSTMENT PERIOD CONTROL SECTION

ELECTRICITY METER

**105** OUTSIDE TEMPERATURE DETECTION UNIT

**100** HEAT PUMP TYPE HEATING APPARATUS

HEAT PUMP

**101** HEAT PUMP

**102** HEAT EXCHANGER

**103** HEATING APPARATUS

**104** HP CONTROL UNIT

········· ELECTRICITY

·—·—· INFORMATION

——— HOT WATER

# FIG. 6

```
                    ┌──────────────┐
                    │    Start     │
                    └──────┬───────┘
                           │
          ┌────────────────▼──────────┐
          │                            │
          │              ╱╲  S601
   No   ╱─────────────╲
 ◄──────   IS OUTPUT    ╲
          ╲ ADJUSTMENT SIGNAL ╱
           ╲  RECEIVED?    ╱
            ╲────┬────────╱
                 │ Yes
                 │        S602
    No      ╱────▼────╲
  ◄────────╲  t > t_s? ╱
            ╲────┬────╱
                 │ Yes
                 │             S603
     ┌───────────▼─────────────┐
     │    OBTAIN MEASURED       │
     │   OUTSIDE TEMPERATURE    │
     └───────────┬─────────────┘
                 │             S604
     ┌───────────▼─────────────┐
     │ OBTAIN HEATING SETTING VALUE │
     └───────────┬─────────────┘
                 │             S605
     ┌───────────▼─────────────┐
     │ DETERMINE HP INSTRUCTION VALUE │
     │ IN OUTPUT ADJUSTMENT PERIOD │
     └───────────┬─────────────┘
                 │             S606
     ┌───────────▼─────────────┐
     │ TRANSMIT HP INSTRUCTION VALUE │
     │ IN OUTPUT ADJUSTMENT PERIOD │
     └───────────┬─────────────┘
                 │        S607
    No      ╱────▼────╲
  ◄────────╲  t > t_f? ╱
            ╲────┬────╱
                 │ Yes      S608
     ┌───────────▼─────────────┐
     │ NOTIFY OF END OF OUTPUT  │
     │   ADJUSTMENT PERIOD      │
     └───────────┬─────────────┘
                 │
```

## FIG. 7

```
                        ┌──────────┐
                        │  Start   │
                        └────┬─────┘
                             │
              ┌──────────────▼──────────────┐
              │                             │          ╱S701
       ┌──────┤         IS THERE            ├──────┐
       │      │   NOTIFICATION OF HP        │ Yes  │
       │      │  INSTRUCTION VALUE IN       │      │
       │      │  OUTPUT ADJUSTMENT          │      │
       │      │        PERIOD?              │      ▼
       │      └──────────────┬──────────────┘   ╱S706
       │                     │ No        ┌──────────────────────┐
       │            ╱S702    │           │ OPERATE HP USING      │
       │   ┌─────────────────▼───────┐   │ TRANSMITTED           │
       │   │ OBTAIN MEASURED OUTSIDE │   │ HP INSTRUCTION VALUE  │
       │   │ TEMPERATURE             │   └───────────┬──────────┘
       │   └─────────────┬───────────┘               │
       │          ╱S703  │                           │
       │   ┌─────────────▼───────────┐               ▼
       │   │ REFER TO HEATING        │         ╱S707
       │   │ SETTING VALUE           │   ┌──────────────┐
       │   └─────────────┬───────────┘   │  IS THERE    │
       │          ╱S704  │          No   │ NOTIFICATION │
       │   ┌─────────────▼───────────┐ ◄─┤  OF END      │
       │   │ DETERMINE HP            │   │ OF OUTPUT    │
       │   │ INSTRUCTION VALUE IN    │   │ ADJUSTMENT   │
       │   │ ORDINARY PERIOD         │   │  PERIOD?     │
       │   └─────────────┬───────────┘   └──────┬───────┘
       │          ╱S705  │                      │ Yes
       │   ┌─────────────▼───────────┐          │
       │   │ OPERATE HP USING HP     │          │
       │   │ INSTRUCTION VALUE IN    │          │
       │   │ ORDINARY PERIOD         │          │
       │   └─────────────┬───────────┘          │
       │                 │                      │
       └─────────────────┴──────────────────────┘
```

EP 3 018 422 B1

# FIG. 8

| (INPUT) TARGET ROOM TEMPERATURE CHANGE PER UNIT TIME [°C/hr] | (INPUT) MEASURED OUTSIDE TEMPERATURE [°C] | | | | | |
|---|---|---|---|---|---|---|
| | −15 | −14 | −13 | −12 | −11 | ··· |
| | (OUTPUT) STANDARD OUTPUT WATER TEMPERATURE [°C] | | | | | |
| +1.5°C | 55 | 53 | 51 | 49 | 47 | ··· |
| +1.0°C | 53 | 51 | 49 | 47 | 45 | ··· |
| +0.5°C | 51 | 49 | 47 | 45 | 43 | ··· |
| 0.0°C | 49 | 47 | 45 | 43 | 41 | ··· |
| −0.5°C | 47 | 45 | 43 | 41 | 39 | ··· |
| −1.0°C | 45 | 43 | 41 | 39 | 37 | ··· |
| −1.5°C | 43 | 41 | 39 | 37 | 35 | ··· |

# FIG. 9

(a) HEATING SETTING VALUE OF FIRST HEAT PUMP TYPE HEATING SYSTEM

TARGET OUTPUT WATER TEMPERATURE

55°C
45°C

COMMON METHOD FOR DETERMINING TARGET OUTPUT WATER TEMPERATURE IN OUTPUT ADJUSTMENT PERIOD (ORDINARY TARGET OUTPUT WATER TEMPERATURE −10°C)

−15°C

OUTSIDE TEMPERATURE

ORIGINAL HEATING SETTING VALUE

(b) HEATING SETTING VALUE OF SECOND HEAT PUMP TYPE HEATING SYSTEM

TARGET OUTPUT WATER TEMPERATURE

40°C
30°C

−15°C

OUTSIDE TEMPERATURE

(c) FIRST HEAT PUMP TYPE HEATING SYSTEM

....... COMMON METHOD FOR DETERMINING TARGET OUTPUT WATER TEMPERATURE IN OUTPUT ADJUSTMENT PERIOD

—— METHOD FOR DETERMINING TARGET OUTPUT WATER TEMPERATURE IN OUTPUT ADJUSTMENT PERIOD IN PRESENT INVENTION

ROOM TEMPERATURE

20°C

TARGET ROOM TEMPERATURE CHANGE = −2°C

18°C

OUTPUT ADJUSTMENT STARTS                OUTPUT ADJUSTMENT ENDS

TIME

(d) SECOND HEAT PUMP TYPE HEATING SYSTEM

ROOM TEMPERATURE

20°C

TARGET ROOM TEMPERATURE CHANGE = −2°C

18°C

OUTPUT ADJUSTMENT STARTS                OUTPUT ADJUSTMENT ENDS

TIME

## FIG. 10

| (INPUT) TARGET ROOM TEMPERATURE CHANGE PER UNIT TIME [°C/hr] | (INPUT) FIRST SETTING ROOM TEMPERATURE [°C] | (INPUT) MEASURED OUTSIDE TEMPERATURE [°C] | | | | | |
|---|---|---|---|---|---|---|---|
| | | −15 | −14 | −13 | −12 | −11 | ··· |
| | | (OUTPUT) STANDARD OUTPUT WATER TEMPERATURE [°C] | | | | | |
| +1.0°C | 21 | 55 | 53 | 51 | 49 | 47 | ··· |
| | 20 | 53 | 51 | 49 | 47 | 45 | ··· |
| | 19 | 51 | 49 | 47 | 45 | 43 | ··· |
| +0.5°C | 21 | 52 | 50 | 48 | 46 | 44 | ··· |
| | 20 | 50 | 48 | 46 | 44 | 42 | ··· |
| | 19 | 48 | 46 | 44 | 42 | 40 | ··· |
| 0.0°C | 21 | 49 | 47 | 45 | 43 | 41 | ··· |
| | 20 | 47 | 45 | 43 | 41 | 39 | ··· |
| | 19 | 45 | 43 | 41 | 39 | 37 | ··· |
| −0.5°C | 21 | 46 | 44 | 42 | 40 | 38 | ··· |
| | 20 | 44 | 42 | 40 | 38 | 36 | ··· |
| | 19 | 42 | 40 | 38 | 36 | 34 | ··· |
| −1.0°C | 21 | 43 | 41 | 39 | 37 | 35 | ··· |
| | 20 | 41 | 39 | 37 | 35 | 33 | ··· |
| | 19 | 39 | 37 | 35 | 33 | 31 | ··· |

# FIG. 11

| (INPUT) AVERAGE OUTPUT WATER TEMPERATURE [°C] | (INPUT) MEASURED OUTSIDE TEMPERATURE [°C] | | | | | |
|---|---|---|---|---|---|---|
| | −15 | −14 | −13 | −12 | −11 | ... |
| ... | ... | ... | ... | ... | ... | ... |
| 30 | 3000 | 2950 | 2900 | 2860 | 2830 | ... |
| 31 | 3200 | 3150 | 3100 | 3060 | 3030 | ... |
| 32 | 3390 | 3340 | 3300 | 3260 | 3220 | ... |
| ... | ... | ... | ... | ... | ... | ... |

# FIG. 12

(a)
OPERATION
EXAMPLE
OF FIRST
EMBODIMENT

40°C — OUTPUT WATER TEMPERATURE
— RETURN TEMPERATURE
— POWER CONSUMPTION
20°C
18°C — ROOM TEMPERATURE

(b)
OPERATION
EXAMPLE
OF THIRD
EMBODIMENT

40°C — OUTPUT WATER TEMPERATURE
— RETURN TEMPERATURE
— POWER CONSUMPTION
20°C
18°C — ROOM TEMPERATURE

OUTPUT ADJUSTMENT STARTS                    OUTPUT ADJUSTMENT ENDS

# FIG. 13

COMMON METHOD FOR DETERMINING TARGET OUTPUT WATER TEMPERATURE IN OUTPUT ADJUSTMENT PERIOD
(ORDINARY TARGET OUTPUT WATER TEMPERATURE – 10°C)

FIRST HEATING SYSTEM
(a)

SECOND HEATING SYSTEM
(b)

THIRD HEATING SYSTEM
(c)

METHOD FOR DETERMINING TARGET OUTPUT WATER TEMPERATURE IN OUTPUT SUPPRESSION PERIOD IN PRESENT DISCLOSURE

FIRST HEATING SYSTEM
(d)

SECOND HEATING SYSTEM
(e)

THIRD HEATING SYSTEM
(f)

EP 3 018 422 B1

# FIG. 14

COMMON METHOD FOR DETERMINING TARGET OUTPUT WATER TEMPERATURE IN OUTPUT ADJUSTMENT PERIOD
(ORDINARY TARGET OUTPUT WATER TEMPERATURE − 10°C)

FIRST HEATING SYSTEM
(FIRST SETTING TEMPERATURE: 18°C)
(a)

SECOND HEATING SYSTEM
(SECOND SETTING TEMPERATURE: 20°C)
(b)

THIRD HEATING SYSTEM
(THIRD SETTING TEMPERATURE: 22°C)
(c)

METHOD FOR DETERMINING TARGET OUTPUT WATER TEMPERATURE IN OUTPUT SUPPRESSION PERIOD IN PRESENT DISCLOSURE

FIRST HEATING SYSTEM
(FIRST SETTING TEMPERATURE: 18°C)
(d)

SECOND HEATING SYSTEM
(SECOND SETTING TEMPERATURE: 20°C)
(e)

THIRD HEATING SYSTEM
(THIRD SETTING TEMPERATURE: 22°C)
(f)

EP 3 018 422 B1

**REFERENCES CITED IN THE DESCRIPTION**

**Patent documents cited in the description**

- US 2010004790 A1

- WO 2013027312 A